# EUROPÄISCHE PATENTSCHRIFT

(11) **EP 2 321 131 B1**
(45) Veröffentlichungstag und Bekanntmachung des Hinweises auf die Patenterteilung: **15.10.2014**
(21) Anmeldenummer: 09777646.2
(22) Anmeldetag: 04.08.2009
(51) Int. Cl.: B42D 15/00

(54) **VERFAHREN ZUR HERSTELLUNG VON SICHERHEITSELEMENTEN MIT GEPASSERTEN MOTIVSCHICHTEN**
METHOD FOR THE PRODUCTION OF SECURITY ELEMENTS HAVING REGISTERED LAYERS OF DESIGNS
PROCEDE POUR PRODUIRE DES ELEMENTS DE SECURITE PRESENTANT DES COUCHES DE MOTIFS EN REGISTRE

(30) Priorität: 05.08.2008 DE 102008036480
(43) Veröffentlichungstag der Anmeldung: 18.05.2011
(73) Patentinhaber: Giesecke & Devrient GmbH, 81677 München (DE)
(72) Erfinder: HOFFMÜLLER, Winfried, 83646 Bad Tölz (DE); RENNER, Patrick, 83677 Reichersbeuern (DE); HEIM, Manfred, 83646 Bad Tölz (DE); BURCHARD, Theodor, 83052 Bruckmühl / OT Götting (DE)
(74) Vertreter: Wessely, Stephan
(86) Internationale Anmeldenummer: PCT/EP2009/005643
(87) Internationale Veröffentlichungsnummer: WO 2010/015384

(56) Entgegenhaltungen:
- WO-A-92/11142
- DE-A1-102007 055 112
- GB-A- 2 429 187

## Beschreibung

Die Erfindung betrifft ein Verfahren zur Herstellung eines Sicherheitselements mit zwei zueinander gepasserten Motivschichten, insbesondere Motivschichten mit im Durchlicht und bevorzugt auch im Auflicht visuell erkennbaren Zeichen, ein mittels des Verfahrens erhältliches Sicherheitselement, das als Transferelement ausgebildete Sicherheitselement, die Verwendung des Sicherheitselements bzw. Transferelements zur Produktsicherung, einen mit dem Sicherheitselement ausgestatteten Wertgegenstand sowie ein Verfahren zur Herstellung eines derartigen Wertgegenstands.

Wertgegenstände, insbesondere Wertdokumente wie Banknoten, Aktien, Ausweise, Kreditkarten, Urkunden, Schecks, und andere fälschungsgefährdete Papiere, wie Ausweisdokumente unterschiedlichster Art, aber auch Markenartikel und Verpackungen von Markenartikeln werden zur Absicherung gerne mit Sicherheitselementen ausgestattet, die eine Überprüfung ihrer Echtheit ermöglichen und gleichzeitig als Schutz vor unerlaubter Reproduktion dienen. Die Sicherheitselemente können beispielsweise die Form von Sicherheitsfäden oder Aufklebern oder irgendeine andere in einen Wertgegenstand oder ein Sicherheitspapier einbringbare oder aufbringbare Form haben, wobei ein "Wertgegenstand" im Sinne der vorliegenden Erfindung jeder gegen Fälschung sicherungswerte Gegenstand ist, insbesondere ein Wertdokument, während ein "Sicherheitspapier" die noch nicht umlauffähige Vorstufe zu einem Wertdokument darstellt.

Sicherheitselemente sind typischerweise mehrschichtige Elemente mit mehreren Funktionsschichten. Funktionsschichten sind ganz allgemein Schichten, die irgendwelche Eigenschaften aufweisen, die visuell oder maschinell nachgewiesen werden können. Funktionsschichten enthalten daher beispielsweise Farbstoffe, Lumineszenzstoffe, thermochrome Stoffe, Flüssigkristalle, Interferenzpigmente, elektrisch leitfähige Stoffe, magnetische Stoffe, lichtbeugende oder lichtbrechende Strukturen oder Kombinationen davon. Die Funktionsschichten sind meist als geometrische oder figürliche Muster bzw. Motive ausgebildet, d. h. es gibt innerhalb einer Schicht Funktionsbereiche mit der nachweisbaren Eigenschaft (beispielsweise Lumineszenz) und Aussparungen dazwischen. Werden mehrere Funktionsschichten übereinander angeordnet, ist es in der Regel wünschenswert, dass die Funktionsbereiche und die Aussparungen in den einzelnen Funktionsschichten exakt registerhaltig, d. h. mit hoher Passergenauigkeit, und mit konturenscharfen Kanten zwischen den Funktionsbereichen und den Aussparungen übereinander ausgebildet sind. Auf diese Weise kann eine Funktionsschicht unter einer anderen versteckt werden, beispielsweise magnetische Stoffe unter einer Farbschicht, oder es können Sicherheitselemente mit mehreren Funktionsschichten und "Negativschrift" hergestellt werden.

Sicherheitselemente mit Negativschrift weisen ein transparentes Substrat mit mindestens einer nicht transparenten Beschichtung, die Aussparungen (die Negativschrift) aufweist, auf. Diese Aussparungen können beliebige Formen haben, beispielsweise Buchstaben, Zahlen oder Muster irgendwelcher Art, insbesondere Linienmuster. Der in dieser Anmeldung verwendete Begriff "Negativschrift" umfasst demnach Aussparungen beliebiger Form, also jede Nicht-Vollflächigkeit in einer nicht transparenten Beschichtung. Je transparenter, d. h. je lichtdurchlässiger, das Trägersubstrat ist, desto ausgeprägter ist der Kontrast zwischen beschichteten und nicht beschichteten Bereichen. Bei sehr transparenten Substraten ist die Negativschrift im Auflicht deutlich erkennbar, bei weniger transparenten Substraten nur im Durchlicht. Weist ein derartiges Sicherheitselement mit Negativschrift zwei unterschiedliche Funktionsschichten auf, beispielsweise ein Motiv in Form einer goldfarbenen metallischen Beschichtung und darauf dasselbe Motiv als rote Druckfarbe, so erscheint dieses Motiv dem Betrachter von der einen Seite her gesehen goldfarben, von der anderen Seite her gesehen rot.

Derartige mehrschichtige Motive sind aufgrund der erforderlichen hohen Passergenauigkeit schwer nachahmbar. Insbesondere Motive mit Negativschriften bieten einen guten Fälschungsschutz, da im Durchlicht Ungenauigkeiten bei der Herstellung besonders leicht erkennbar sind, und "primitive" Fälschungsversuche, wie etwa das Kopieren mit Farbkopierern, auch für das ungeübte Auge sofort erkennbar sind.

Die Fälschungssicherheit ist umso höher, je feiner die Strukturen in den Funktionsschichten mit den zueinander gepasserten Motiven sind. Feinste Strukturen konturenscharf und im perfekten Register zueinander auszubilden stellt allerdings auch für autorisierte Hersteller eine Herausforderung dar. Es sind eine Reihe von Verfahren bekannt, die es ermöglichen sollen, Aussparungen in mehreren übereinander liegenden Funktionsschichten passergenau, d. h. deckungsgleich in allen Schichten, auszubilden.

Aus WO 92/11142 ist bekannt, Negativschriften in Funktionsschichten mittels durch Wärmeeinwirkung aktivierbaren Druckfarben zu erzeugen. Die Druckfarben werden in Form der gewünschten Negativschrift unter den Funktionsschichten aufgedruckt und enthalten Wachse oder aufschäumende Additive, die bei Erwärmung erweichen bzw. ein Gas abspalten und dadurch Schaumstrukturen erzeugen. Dadurch verringert sich die Haftung in den mit der aktivierbaren Druckfarbe bedruckten Bereichen, und die Funktionsschichten können in diesen Bereichen mechanisch entfernt werden.

DE 10 2007 055 112 offenbart ein Verfahren zur registerhaltigen, d. h. deckungsgleichen Ausbildung einer Negativschrift in mehreren Funktionsschichten mit Hilfe einer in Form der auszubildenden Negativschrift unter den Funktionsschichten aufgedruckten Druckfarbe, die einen Bestandteil enthält, der bei Bestrahlung oder bei Erwärmung oder bei Kontakt mit einer Waschflüssigkeit einen Prozess bewirkt, der dazu führt, dass seitens der Druckfarbe auf die darüber liegende Beschichtung eine Kraft ausgeübt wird, die die Beschichtung aufbrechen lässt. Diese Kraft kann durch ein Gas ausgeübt werden, das von Bestandteilen der Druckfarbe erzeugt wird, wenn diese mit Waschflüssigkeit in Kontakt kommen, bestrahlt und/oder erwärmt werden, oder durch ein Quellmittel in der Druckfarbe, das bei Kontakt mit einer Waschflüssigkeit aufquillt. Ist die mehrschichtige Beschichtung erst einmal aufgebrochen, ist sie für ein Auswaschen mit Waschflüssigkeit relativ leicht zugänglich

GB 2429187 offenbart ein Sicherheitselement mit Negativschrift bei der eine auf eine transluzente Schicht aufgetragene Metallschicht in Bereichen demetallisiert, die nicht mit einer Resistschicht versehen ist.

Die genannten Verfahren funktionieren zufriedenstellend, solange keine sehr feinen Strukturen auszubilden sind. Das Problem der Ausbildung deckungsgleicher Muster und Negativschriften in mehreren Schichten mit hoher Passergenauigkeit und Konturenschärfe ist jedoch insbesondere für feine Strukturen bisher nicht zufriedenstellend gelöst.

Aufgabe der vorliegenden Erfindung ist es daher, ein Verfahren zur Herstellung von Sicherheitselementen bereitzustellen, das es erlaubt, in zwei übereinander liegenden Schichten zumindest bereichsweise deckungsgleiche Muster bzw. Motive auszubilden.

Aufgabe der vorliegenden Erfindung ist es insbesondere, ein derartiges Verfahren bereitzustellen, mit dem zumindest bereichsweise deckungsgleiche Muster bzw. Motive konturenscharf und mit hoher Passergenauigkeit ausgebildet werden können.

Aufgabe der vorliegenden Erfindung ist es darüber hinaus, ein derartiges Verfahren bereitzustellen, wobei die auszubildenden Muster bzw. Motive sehr feine Strukturen aufweisen.

Aufgabe der vorliegenden Erfindung ist es auch, ein Sicherheitselement mit zwei Motivschichten mit einander entsprechenden Mustern bzw. Motiven, die eine hohe Passergenauigkeit aufweisen, bereitzustellen.

Aufgabe der vorliegenden Erfindung ist es ferner, ein derartiges Sicherheitselement bereitzustellen, bei dem die Motivschichten sehr feine Strukturen aufweisen und konturenscharf ausgebildet sind.

Aufgabe der vorliegenden Erfindung ist es darüber hinaus, derartige Sicherheitselemente in Form von Transferelementen bereitzustellen, sowie Sicherheitspapiere und Wertgegenstände mit den erfindungsgemäßen Sicherheitselementen bzw. Transferelementen und Verfahren zur Herstellung der Sicherheitspapiere und der Wertgegenstände bereitzustellen.

Die Aufgaben werden gelöst durch das Verfahren zur Herstellung eines Sicherheitselements mit den in Anspruch 1 angegebenen Merkmalen, durch das Sicherheitselement mit den in Anspruch 9 angegebenen Merkmalen, durch das Transfermaterial mit den in Anspruch 13 angegebenen Merkmalen, durch das Sicherheitspapier bzw. den Wertgegenstand gemäß Anspruch 14 und durch das Verfahren gemäß Anspruch 15.

Spezielle Ausführungsformen der vorliegenden Erfindung sind in den jeweiligen abhängigen Ansprüchen angegeben.

Der Grundgedanke der vorliegenden Erfindung besteht darin, eine klebefähige Resistschicht zu verwenden, um in zwei Funktionsschichten deckungsgleiche Muster auszubilden. Dazu wird eine Resistschicht in Form des gewünschten Musters auf eine erste Funktionsschicht aufgetragen. Das Muster wird in der ersten Funktionsschicht exakt reproduziert, indem die nicht durch den Resist geschützten Bereiche der ersten Funktionsschicht entfernt werden. Anschließend wird das Muster in der zweiten Funktionsschicht reproduziert, indem die zweite Funktionsschicht mit dem Resist verklebt wird. Die Verklebung findet nur in den Bereichen statt, in denen die zweite Funktionsschicht Kontakt mit dem Resist hat. Die nicht verklebten Bereiche der zweiten Funktionsschicht werden dann entfernt, während die verklebten Bereiche nicht entfernt werden können, wodurch in der zweiten Funktionsschicht eine exakte Reproduktion des Musters der Resistschicht und der ersten Funktionsschicht entsteht.

Das erfindungsgemäße Sicherheitselement wird aus zwei Teilelementen hergestellt. Ein erstes Teilelement besteht mindestens aus einem Trägersubstrat und einer Funktionsschicht, bevorzugt mit Aussparungen darin. Weitere Schichten können vorhanden sein. Die Funktionsschicht kann auch aus mehreren Einzelschichten aufgebaut sein.

Das Trägersubstrat des ersten Sicherheitselement-Teilelements ist bevorzugt eine Folie, beispielsweise aus Polypropylen, Polyethylen, Polystyrol, Polyester, insbesondere Polycarbonat oder Polyethylenterephthalat. Transparente oder transluzente Folien sind besonders bevorzugt. Bei einer Verwendung derartiger Folien können die passergenau ausgebildeten Aussparungen in den einzelnen Funktionsschichten deutlich als Negativschrift erkannt werden.

Ein großer Vorteil des erfindungsgemäßen Verfahrens besteht darin, dass es ohne einen Belichtungsschritt auskommt, da der Resist in Form des gewünschten Motivs mittels an sich bekannter Verfahren aufgebracht werden kann. Das erfindungsgemäße Verfahren ermöglicht demnach die Herstellung präzise gepasserter Funktionsschichten ohne Belichtungsschritte, wobei die erfindungsgemäßen Sicherheitselemente dennoch durch eine sehr große Fälschungssicherheit charakterisiert sind.

Zur Herstellung des ersten Sicherheitselement-Teilelements wird zunächst auf dem Trägersubstrat eine Funktionsschicht ausgebildet. Die Funktionsschicht kann grundsätzlich von beliebiger Art sein, wie sie bei Sicherheitselementen verwendet wird. Als Beispiele seien genannt Metallschichten aus beispielsweise Aluminium, Eisen, Kupfer, Gold, Nickel, etc., Metalllegierungen, oder Schichten aus Metalleffektfarben, Schichten mit Farbpigmenten oder Fluoreszenzpigmenten, Flüssigkristall-Schichten, Beschichtungen mit Farbkippeffekt, Schichtkombinationen wie beispielsweise eine mit einer bestimmten Farbe unterlegte Schicht mit Farbkippeffekt, Schichten mit maschinell nachweisbaren Merkmalen, beispielsweise mit Magnetpigmenten, die gegebenenfalls unter einer Deckschicht versteckt werden können.

Die Aufbringung der Funktionsschichten erfolgt nach bekannten Verfahren, die für die jeweilige Funktionsschicht geeignet sind, beispielsweise durch physikalische Dampfabscheidung (PVD) bei Metallen oder durch Aufdrucken bei Farbpigmenten oder Fluoreszenzpigmenten. Die Auftragung kann vollflächig oder nur in Teilbereichen erfolgen.

Die Funktionsschicht kann direkt auf dem Trägersubstrat ausgebildet werden, oder es können eine oder mehrere Zwischenschichten vorgesehen werden. Für manche Funktionsschichten sind Zwischenschichten zwingend erforderlich, beispielsweise wenn es sich bei dem Motiv der Funktionsschicht um ein metallisiertes Hologramm, Kinegram, Pixelgramm oder eine sonstige metallisierte Beugungsstruktur handelt. In einem solchen Fall wird zuerst eine Prägelackschicht aufgetragen und in die Prägelackschicht, vor oder nach der Metallisierung, die gewünschte diffraktive Struktur eingeprägt. Auch bei Flüssigkristall-Schichten ist in der Regel eine Zwischenschicht erforderlich, die für eine passende Orientierung der Flüssigkristalle sorgt. Geeignete Orientierungsschichten können beispielsweise in Prägelackschichten eingeprägten diffraktive Strukturen sein. Alternativ kann gegebenenfalls auch die Trägerfolie geeignet behandelt werden.

Gemäß einer bevorzugten Ausführungsform der vorliegenden Erfindung ist eine der Motivschichten eine metallisierte Beugungsstruktur wie ein metallisiertes Hologramm, besonders bevorzugt ist auch eine weitere Motivschicht eine metallisierte Beugungsstruktur, wie ein metallisiertes Hologramm. Wenn im Folgenden von Hologrammen gesprochen wird, versteht es sich, dass dasselbe auch für andere Beugungsstrukturen und Brechungsstrukturen gilt sowie für sogenannte "Mattstrukturen" (Gitterbilder mit achromatischen Gitterbereichen), wie sie z. B. in der WO 2007/107235 A1 definiert und beschrieben sind (siehe insbesondere Anspruch 1).

Wie oben erwähnt, ist im Falle von Hologrammen eine Prägelackschicht vorzusehen, die die gewünschte Strukturinformation eingeprägt enthält. Die Strukturinformation wird beim Verkleben mit dem zweiten Sicherheitselement-Teilelement mit übertragen. Hologramme bzw. Strukturinformationen ganz allgemein können in den Funktionsschichten eines erfindungsgemäßen Sicherheitselements gleich oder verschieden sein. Materialien für Prägelackschichten sind einem Fachmann bekannt. Geeignete Prägelacke sind beispielsweise offenbart in DE 10 2004 035 979 A1, die Heißsiegellacke offenbart, die gleichermaßen als Prägelack eingesetzt werden können.

Auf die Funktionsschicht des ersten Sicherheitselement-Teilelements wird in einem weiteren Schritt ein Resist aufgetragen. Unter einem Resist wird im Rahmen der vorliegenden Anmeldung jedes Material verstanden, das die Durchführung des erfindungsgemäßen Verfahrens zur Herstellung eines erfindungsgemäßen Sicherheitselements gestattet. Insbesondere muss ein solches Resistmaterial Bereiche der ersten Funktionsschicht vor der Entfernung schützen können, um nur in den nicht geschützten Bereichen erste Aussparungen in der ersten Funktionsschicht zu erzeugen. Des Weiteren muss das Resistmaterial eine ausreichende Klebefähigekeit aufweisen, um erste und zweite Funktionsbereiche miteinander zu verkleben. Demnach sind als Resistmaterialien Verbindungen geeignet, die Bereiche der ersten Funktionsschicht vor Entfernung schützen können und ausreichend klebefähig sind. Geeignete Resistmaterialien sind daher z.B. verschiedene thermoplastische Materialien. Bevorzugt werden thermoplastische Resistlacke verwendet. Beispiele für erfindungsgemäße Resistlacke werden weiter unten angeführt.

Der Resist wird bevorzugt in Form des gewünschten Musters aufgetragen, beispielsweise aufgedruckt. Dem Fachmann sind dafür geeignete Druckverfahren bekannt.

Anschließend wird die Funktionsschicht des ersten Sicherheitselement-Teilelements, d. h. die erste Funktionsschicht, strukturiert, d. h. das Muster der Resistschicht wird in die erste Funktionsschicht übertragen. Die Übertragung geschieht in der Weise, dass die nicht durch Resist geschützten Bereiche der ersten Funktionsschicht entfernt werden, bei metallischen Funktionsschichten beispielsweise durch Ätzmittel wie Laugen oder Säuren, bei Druckfarben beispielsweise durch Auswaschen mit geeigneten Lösungsmitteln. Geeignete Verfahren sind dem Fachmann bekannt. Das erste Sicherheitselement-Teilelement besitzt nun ein Muster, das deckungsgleiche Funktionsbereiche und Resistbereiche und ebenfalls deckungsgleiche Aussparungen zwischen diesen Bereichen aufweist. Das Muster kann beispielsweise eine Codierung oder ein geometrisches oder figürliches Motiv bilden.

Als nächstes wird das zweite Sicherheitselement-Teilelement hergestellt.

Das zweite Sicherheitselement-Teilelement weist, wie das erste Sicherheitselement-Teilelement, mindestens zwei Schichten auf, nämlich ein Trägersubstrat und eine darauf ausgebildete Funktionsschicht. Zusätzlich können weitere Schichten vorhanden sein, bzw. müssen vorhanden sein, wie vorstehend für das erste Sicherheitselement-Teilelement ausgeführt wurde.

Generell gilt für die Materialien, den Aufbau und die Herstellung der Schichten des zweiten Sicherheitselement-Teilelements dasselbe wie für das erste Sicherheitselement-Teilelement, wobei jedoch zu beachten ist, dass in der Funktionsschicht, oder der Funktionsschichtfolge, keine Aussparungen ausgebildet werden. Die Aussparungen werden erst durch Zusammenwirken mit dem ersten Sicherheitselement-Teilelement bzw. der Resistschicht darauf erzeugt. Außerdem wird das Trägersubstrat des zweiten Sicherheitselement-Teilelements später zusammen mit Teilen der Funktionsschicht des zweiten Sicherheitselement-Teilelements abgetrennt, z. B. durch Trennwicklung abgezogen (z. B. den Teilen der Funktionsschicht, die in dem zusammengesetzten Sicherheitselement über Aussparungen in der Funktionsschicht des ersten Sicherheitselement-Teilelements angeordnet sind), während sich das Trägersubstrat von anderen Teilen der Funktionsschicht des zweiten Sicherheitselement-Teilelements (z. B. den Teilen, die in dem zusammengesetzten Sicherheitselement über Funktionsbereichen des ersten Sicherheitselement-Teilelements angeordnet sind), ablösen lassen muss. Daher ist es erforderlich, dass die Funktionsschicht nur eine geringe Haftung an dem Trägersubstrat besitzt.

Die erforderliche geringe Haftkraft wird bei vielen Funktionsschichtmaterialien, insbesondere Metallisierungen, schon alleine dadurch erreicht, dass auf haftvermittelnde Maßnahmen zwischen Trägersubstrat und Funktionsschicht verzichtet wird. Das Treffen haftvermittelnder Maßnahmen zwischen den einzelnen Schichten eines Sicherheitselements ist ansonsten üblich, und die entsprechenden Vorkehrungen einem Fachmann bekannt.

Wenn die Haftkraft zwischen Trägersubstrat und Funktionsschicht zu hoch ist, kann sie durch Behandeln des Trägersubstrats mit geeigneten Additiven herabgesetzt werden. Beispielsweise kann das Trägersubstrat mit Wasser und/oder Lösungsmitteln mit oder ohne geeignete Additive abgewaschen werden. Als entsprechende Additive geeignet sind beispielsweise tensidisch wirkende Substanzen, Entschäumer oder Verdicker. Additive können auch in das Trägersubstrat selbst eingebracht werden. Alternativ können unter der Funktionsschicht haftvermindernde Schichten vorgesehen werden. Für die haftvermindernden Schichten werden Materialien gewählt, auf deren Oberflächen bekanntermaßen für gewöhnlich eine relativ schlechte Haftung auftritt, beispielsweise Silikonisierungen, Schichten, die Releaseadditve (z. B. Byk 3500) enthalten, Wachse, ausgehärtete UV-Lacke, Metallisierungen, unbehandelte Folien wie z. B. PET. Durch Abstimmung der Oberflächenenergie-Verhältnisse des Trägersubstrats bzw. der haftvermindernden Schicht und der abzulösenden Funktionsschicht kann eine leichte Ablösbarkeit der Funktionsschicht erreicht und damit das gewünschte Muster in der Funktionsschicht des zweiten Sicherheitselement-Teilelements erzeugt werden.

Analoges gilt für gegebenenfalls zwischen dem Trägersubstrat und der Funktionsschicht vorhandene Zwischenschichten, beispielsweise Prägelackschichten für ein Hologramm. Soll eine derartige Prägelackschicht oder sonstige Zwischenschicht zusammen mit dem Trägersubstrat abgezogen werden, muss entsprechend die Haftkraft zwischen der Zwischenschicht und der Funktionsschicht, also beispielsweise zwischen der Prägelackschicht und einer darauf aufgebrachten Metallisierung, gering sein. Im Falle einer zu hohen Haftkraft ist die Zwischenschicht mit den genannten Additiven zu behandeln, oder eine haftvermindernde Schicht vorzusehen.

Wird eine Behandlung des Trägersubstrats oder einer Zwischenschicht mit haftverringernden Additiven vorgenommen, können nach dem Abtrennen des Trägersubstrats bzw. der Zwischenschicht Reste der Additive auf der Funktionsschicht verbleiben. Diese können normalerweise einfach mit einer wässrigen Lösung, deren pH geeignet eingestellt ist und die gegebenenfalls auch Tenside enthalten kann, weggewaschen werden. Auch eine Wäsche mit Lösungsmitteln ist möglich. In hartnäckigen Fällen kann auch mit Hochdruckdüsen und/oder mechanischer Unterstützung (Filze, Bürsten) gearbeitet werden, doch dies ist für gewöhnlich nicht erforderlich. Geringe Additivreste können auch mittels einer Koronabehandlung "weggebrannt" werden. Im übrigen kann in vielen Fällen auch ganz auf eine Entfernung von Additivresten verzichtet werden. Geeignete formulierte Schutzlacke können auch auf "additivbelasteten" Funktionsschichten ausreichend haften.

Nun werden das erste Sicherheitselement-Teilelement, das eine Funktionsschicht mit Funktionsbereichen und Aussparungen aufweist, und das zweite Sicherheitselement-Teilelement, das eine Funktionsschicht im Wesentlichen ohne Aussparungen aufweist, mit Hilfe der auf den Funktionsbereichen des ersten Sicherheitselement-Teilelements befindlichen Resistschicht miteinander verbunden. Auf die Resistschicht wird das zweite Sicherheitselement-Teilelement so aufgesetzt, dass seine Funktionsschicht die Resistschicht kontaktiert. Die beiden Teilelemente werden zusammengepresst, gegebenenfalls unter erhöhter Temperatur, wodurch die Resistschicht mit der Funktionsschicht des zweiten Sicherheitselement-Teilelements verklebt. Da die Resistbereiche in Abmessung und Form den Funktionsbereichen der Funktionsschicht des ersten Sicherheitselement-Teilelements entsprechen, erfolgt die Verklebung mit der Funktionsschicht des zweiten SicherheitselementTeilelements in einer Weise, dass sie exakt das Muster der Funktionsschicht des ersten Sicherheitselement-Teilelements wiedergibt. Geeignete Verklebungsbedingungen für thermoplastische Resistlacke sind typischerweise etwa 60 °C bis 160 °C und ein Liniendruck von typischerweise 0,1 N/mm bis 15 N/mm, besonders bevorzugt von ca. 5 N/mm.

Schließlich wird die Trägerfolie des zweiten Sicherheitselement-Teilelements abgezogen, gegebenenfalls zusammen mit Zwischenschichten zwischen Trägerfolie und Funktionsschicht, wobei die Funktionsschicht in den nicht verklebten Bereichen mit abgezogen wird, während sie in den verklebten Bereichen natürlich nicht abgezogen werden kann, so dass ein Sicherheitselement mit zwei zueinander völlig deckungsgleichen Mustern entsteht. Die Unschärfen bei der Trennung liegen unter 10 µm. Die zweite Motivschicht kann gegebenenfalls mit einer Schutzschicht abgedeckt werden. So können Strukturen mit einer Breite von etwa 50 µm oder weniger deckungsgleich und kantenscharf ausgebildet werden.

Da es nicht immer möglich ist, das erste Sicherheitselement-Teilelement und das zweite Sicherheitselement-Teilelement unmittelbar nach der Herstellung miteinander mittels Resistlack zu verkleben, ist es vorteilhaft, wenn vorbereitete Elemente auf Lager gehalten werden können. Eine gewisse Liegezeit ist auch insofern vorteilhaft, als durch die Alterung die Widerstandsfähigkeit des Resists erhöht wird. Dazu ist es erforderlich, dass die Sicherheitselement-Teilelemente gestapelt oder gewickelt werden können. Um ein Verkleben der gestapelten oder gewickelten, mit Resistlack beschichteten Sicherheitselement-Teilelemente miteinander zu verhindern, sollten die beschichteten Sicherheitselement-Teilelemente gut getrocknet werden. Außerdem sollten Resistmaterialien verwendet werden, die bei Raumtemperatur nicht zum Verblocken neigen, d. h. "tackfrei" sind. Das Vorliegen von Tackfreiheit kann durch folgenden Test überprüft werden: Beschichtete Folienstücke von etwa 100 cm² werden gestapelt und mit einem Gewicht von 10 kg belastet und 72 Stunden lang bei 40 °C gelagert. Lassen sich die Folienstücke danach ohne Beschädigung der Beschichtungen mühelos voneinander trennen, ist die Beschichtung als tackfrei anzusehen. Unter erhöhtem Druck und erhöhter Temperatur (ca. 100 °C bist 160 °C) können mit den Resistlacken beschichtete Substrate mit anderen Substraten verklebt werden. Erfindungsgemäß können folgende Resistlacke, teilweise sogar tackfreie Resistlacke eingesetzt werden. Die nachfolgenden Rezepturen sind dabei lediglich beispielhaft und nicht als beschränkend aufzufassen.

| Produkt | Gew.-% |
|---|---|
| VMCH (Vinylchlorid-Copolymer mit Säuregruppen, Hersteller: DOW) | 20 % |
| Ethylacetat | 80 % |

| Produkt | Gew-% |
|---|---|
| VMCA (Vinylchlorid-Copolymer mit Säuregruppen, Hersteller: DOW) | 18 % |
| Weichmacher (z.B. Phthalate, Citronensäureester¹⁾) | 2 % |
| MEK (Methylethylketon, 2-Butanon) | 80 % |
| | |
| H15/45M (Vinylchlorid-Copolymer mit Säuregruppen, Hersteller: Wacker) | 18 % |
| Weichmacher (z.B. Phthalate, Citronensäureester¹⁾) MEK (Methylethylketon, 2-Butanon) | 2 % 80 % |
| | |
| VMCH (Vinylchlorid-Copolymer mit Säuregruppen, Hersteller: DOW) | 8,35 % |
| VYHH (Vinylchlorid-Copolymer, Hersteller: DOW) | 8,35 % |
| Weichmacher (z.B. Phthalate, Citronensäureester¹⁾) | 3,30 % |
| MEK (Methylethylketon, 2-Butanon) | 80,00 % |

| | |
|---|---|
| ¹⁾ Beispiele für geeignete Weichmacher sind: Citrofol B II (ATBC), Citrofol AH II (ATEHV), Citrofol B I (TBC) von Jungbunzlauer, Palatinol N von BASF. | |

| | |
|---|---|
| Pioloform BL 18 (Polyvinylbutyral, Hersteller: Wacker) | 20 % |
| Ethylacetat | 40 % |
| Ethanol | 40 % |

Ist es erwünscht, das erste Sicherheitselement-Teilelement und das zweite Sicherheitselement-Teilelement bei einer möglichst niedrigen Temperatur miteinander zu verkleben, kann das erste Sicherheitselement-Teilelement unmittelbar vor dem Verkleben mit einem Lösungsmittel bedruckt werden, beispielsweise mit Cyclopentanon, oder einer lösungsmittelhaltigen Atmosphäre ausgesetzt werden. Der Resistlack nimmt das Lösungsmittel auf und wird klebrig oder schmilzt bei niedriger Temperatur als im trockenen Zustand.

Ausführungsformen des erfindungsgemäßen Sicherheitselements, die als Funktionsschichten oder einer der Funktionsschichten eine reflektierende Schicht aufweisen, können auch sehr gut mit einem sogenannten "Polarisations-Merkmal" ausgestattet werden. Darunter sind Sicherheitsmerkmale zu verstehen, die Polarisationseffekte zur Echtheitssicherung nutzen. Lichtreflektierende Oberflächen, beispielsweise metallisierte Hologramme, werden vollflächig oder bereichsweise mit einer doppelbrechenden Schicht, einer sogenannten "Phasenverzögerungsschicht" beschichtet. Phasenverzögerungsschichten sind in der Lage, die Polarisation und Phase von hindurchgehendem Licht zu ändern. Der Grund ist, dass das Licht in zwei zueinander senkrecht stehende Polarisationsrichtungen zerlegt wird, die die Schicht mit unterschiedlicher Geschwindigkeit passieren, deren Phasen also gegeneinander verschoben werden. Die Verschiebung ist, abhängig von Art und Dicke der Schicht, unterschiedlich groß und wirkt sich unterschiedlich aus. Eine λ/4-Schicht, also eine Schicht, die das Licht in einer Richtung um eine viertel Wellenlänge gegen die dazu senkrechte Richtung verzögert, kann aus linear polarisiertem Licht zirkular oder elliptisch polarisiertes Licht machen und aus zirkular polarisiertem Licht wieder linear polarisiertes. Das Phänomen der Polarisierung sowie polarisierende Materialien sind bekannt. Ein Sicherheitselement, das Polarisationseffekte zur Echtheitssicherung nutzt, ist beispielsweise in DE 10 2006 021 429 A1 beschrieben. Bei Betrachtung unter Umgebungslicht sind die Bereiche mit Phasenverzögerungsschicht eines derartigen Sicherheitselements kaum wahrnehmbar, bei Betrachtung unter polarisiertem Licht jedoch werden die Bereiche mit Phasenverzögerungsschicht erkennbar.

Lässt man auf eine lichtreflektierende Oberfläche, die bereichsweise mit polarisierendem Material beschichtet ist, Licht durch einen Polarisator einfallen, wird das Licht in den beschichteten und in den unbeschichteten Bereichen mit unterschiedlicher Polarisierung reflektiert. Bei Betrachtung durch einen Polarisator beobachtet man dadurch hell/dunkel-Kontraste. Unerlässlich für die Erzielung guter optischer Effekte ist, dass die lichtreflektierende Oberfläche den Polarisationszustand des einfallenden Lichts nicht unkontrolliert verändert. Geeignete reflektierende Schichten sind Schichten aus aufgedampften Metallisierungen, Schichten aus Metalleffektfarben, Schichten mit Interferenzpigmenten oder Dünnschichtelement-Schichten. Auch hochbrechende Schichten aus beispielsweise TiO₂ oder SiO₂ sind als Reflexionsschichten geeignet.

Bei der vorliegenden Erfindung werden bevorzugt metallische Funktionsschichten, beispielsweise metallisierte Beugungsstrukturen, mit einem Polarisations-Merkmal kombiniert. Das Polarisations-Merkmal kann beispielsweise als λ/4-Schicht ausgeführt werden, in Motiv-Form, vollflächig oder bereichsweise, mit nur einer Orientierung oder mit zwei oder mehr unterschiedlichen Orientierungen aufgebracht werden. Weist das Sicherheitselement an beiden Seiten reflektierende Funktionsschichten auf, können beide reflektierenden Funktionsschichten mit gleichen oder unterschiedlichen Polarisations-Merkmalen ausgestattet werden. Die transparenten Bereiche (Aussparungen) sind nicht störend. Das Trägersubstrat sollte isotrop sein oder zumindest im optischen Bereich keine zu starke Dispersion zeigen.

Die Funktionsschichten, die in auf der Resistschicht verbleibende Bereiche einerseits und in mit dem Trägersubstrat abzuziehende Bereiche andererseits getrennt werden müssen, dürfen in horizontaler Richtung (in Erstreckungsrichtung der Resistschicht) keine zu hohe innere Festigkeit besitzen, um eine saubere und kantenscharfe Trennung zu gewährleisten. Funktionsschichten, deren innere Festigkeit unerwünscht hoch ist, werden bevorzugt gerastert aufgetragen. Der Rand jedes Rasterpunkts stellt eine Sollbruchstelle dar, wodurch der Transfer auf die Resistschicht in diesem Fall als kleinste Einheit einen Rasterpunkt umfasst. Ist eine Funktionsschicht aus mehreren Einzelschichten aufgebaut, kann es ausreichend sein, lediglich eine der Einzelschichten als stehendes Raster auszuführen. Gegebenenfalls muss das Übertragen des Rasters mit einem weiteren zweiten Sicherheitselement-Teilelement (einer weiteren Spenderfolie) wiederholt werden, um den Resistlack im wesentlichen vollflächig mit der zweiten Funktionsschicht zu bedecken.

Gemäß einer besonders bevorzugten Ausführungsform der vorliegenden Erfindung weisen die Sicherheitselemente drei verschiedene vom Betrachter wahrzunehmende Ansichten auf: eine vordere Ansicht im Auflicht (vorderseitige Auflichtansicht), eine rückseitige Ansicht im Auflicht (rückseitige Auflichtansicht) und eine Ansicht in Durchsicht (Durchlichtansicht). Diese verschiedenen Ansichten können erzielt werden, indem man die Funktionsbereiche des ersten Sicherheitselement-Teilelements und des zweiten Sicherheitselement-Teilelements jeweils mit Motiven ausstattet, die nur von einer Seite her (Vorderseite oder Rückseite) wahrgenommen werden können, und außerdem die Funktionsbereiche, d. h. ihre flächenmäßige Ausdehnung, so varüert, dass durch die Flächenvariation ein weiteres Muster, ein so genanntes Sub-Muster, gebildet wird.

Beispielsweise kann das in vorderseitiger und rückseitiger Ansicht wahrgenommene Muster durch gerade oder geschwungene, parallele oder sich kreuzende Linien einer bestimmten Breite mit Aussparungen dazwischen gebildet werden. Dieses Muster kann zusätzlich noch Träger für ein Motiv sein, das in Aufsicht vom Betrachter in erster Linie wahrgenommen wird, beispielsweise ein in vorderseitiger Auflichtansicht sichtbares erstes Hologramm und ein davon verschiedenes zweites Hologramm, das in rückseitiger Auflichtansicht wahrgenommen wird. Ein solcher Effekt ist zu erzielen, wenn die Linien von ersten und zweiten Funktionsbereichen gebildet werden, die aus Metallisierungen mit unterschiedlichen holographischen Informationen bestehen.

Um ein Sub-Muster in Durchlichtansicht sichtbar werden zu lassen, sind die Linien stellenweise breiter ausgebildet. Die größere Linienbreite fällt in Aufsicht nicht stark auf, im Durchlicht jedoch, wenn die Motivinformation, wie die Hologramme, vom Betrachter nicht mehr wahrnehmbar ist, wird die flächenmäßige Ausdehnung der Linien zur einzig erkennbaren Information, und Abweichungen in der Linienbreite werden als Sub-Muster wahrgenommen. Diese Modulation von linienartigen Strukturelementen ist für die Erzeugung von Halbtonbildern bekannt. Es wird diesbezüglich verwiesen auf WO 2004/020217 A1, deren Offenbarungsgehalt insoweit zum Gegenstand der der vorliegenden Anmeldung gemacht wird. Gemäß der vorliegenden Erfindung können die Muster der Funktionsschichten aus linienförmigen Strukturelementen, wie sie in WO 2004/020217 A1 offenbart sind, gebildet werden.

Anstelle eines zweiten Sicherheitselement-Teilelements, bei dem das Motiv der Funktionsschicht ein metallisiertes Hologramm oder eine sonstige metallisierte Beugungsstruktur ist, kann alternativ ein zweites Sicherheitselement-Teilelement verwendet werden, das ein Trägersubstrat mit einer darauf ausgebildeten Schicht, die zum Ausbilden eines metallisierten Hologramms bzw. einer sonstigen metallisierten Beugungsstruktur geeignet ist, aufweist. Beispielsweise kann als das zweite Sicherheitselement-Teilelement eine Metallspendefolie ohne Prägung hergestellt werden, die ein Trägersubstrat mit einer darauf ausgebildeten Metallschicht aufweist. Von dieser Metallspendefolie wird gemäß dem vorstehend beschriebenen Verfahren zur Herstellung eines Sicherheitselements die Metallschicht unter Druck und Temperatur auf die Resistschicht, die auf dem ersten Sicherheitselement-Teilelement erzeugt ist, übertragen. Anschließend wird unter Druck und Temperatur eine Prägung durchgeführt, um die Metallschicht zu einem metallisierten Hologramm bzw. einer sonstigen metallisierten Beugungsstruktur auszubilden. Als Prägewerkzeug kann in diesem Fall beispielsweise ein Prägezylinder, eine normale geprägte Folie oder eine metallisierte geprägte Folie dienen. Die Verwendung einer Metallspendefolie ohne Prägung als das zweite Sicherheitselement-Teilelement ermöglicht eine optimale Freiheit bei der Einstellung der Metallhaftkraft und eine perfekte Gleichmäßigkeit, so dass auch bei niedrigen Temperaturen ein Metallisierungstransfer gelingt.

Die Erfindung wird nachfolgend anhand von Zeichnungen näher erläutert. Es wird darauf hingewiesen, dass die vorliegende Erfindung keinesfalls auf die dargestellten Funktionsschichten, ihre spezielle räumliche Anordnung und Abfolge, beschränkt ist. Vielmehr können beliebige Funktionsschichten in beliebigen Kombinationen, beispielsweise Schichten aus Druckfarben, Metalleffektfarben, Interferenzpigmenten, Flüssigkristallschichten und Kombinationen von Schichten, beispielsweise Farbschichten mit Schichten von Interferenzpigmenten darauf, eingesetzt werden. Die Schichten können jeweils vollflächig oder in Teilbereichen der Sicherheitselemente vorhanden sein. Außerdem können weitere Schichten, wie sie im Bereich der Sicherheitselemente üblich sind, in den Sicherheitselement-Aufbauten enthalten sein, beispielsweise Schutzschichten oder Release-Schichten im Falle von Transferelementen, haftungsverringernde Schichten zur erleichterten Abtrennung der Funktionsschicht-Bereiche, die auf der Resistschicht verbleiben sollen etc.. Es versteht sich, dass die zusätzlichen Schichten den Verfahrensablauf nicht stören dürfen. Ferner wird darauf hingewiesen, dass die Darstellungen natürlich nicht maßstabsgetreu sind. Insbesondere sind die einzelnen Schichten stark überhöht dargestellt.

In den Figuren zeigen:
- Fig. 1a: ein erfindungsgemäßes Sicherheitselement in Durchsicht-Ansicht,
- Fig. 1b: das Sicherheitselement von Fig. 1a in Aufsicht-Ansicht vor farblich abgestimmtem Hintergrund,
- Fig. 2a bis Fig. 2e: den Verfahrensablauf bei der Herstellung eines erfindungsgemäßen Sicherheitselements, veranschaulicht an Schnitten durch das Sicherheitselement von Fig. 1a entlang der Linie A-A',
- Fig. 3 bis Fig. 6: weitere Ausführungsformen erfindungsgemäßer Sicherheitselemente, veranschaulicht anhand ausgewählter Herstellungsstadien an Schnitten wie in den Figuren 2a bis 2e, und
- Fig. 7a bis Fig. 7d: einen alternativen Verfahrensablauf bei der Herstellung eines erfindungsgemäßen Sicherheitselements, veranschaulicht an Schnitten durch das Sicherheitselement von Fig. 1a entlang der Linie A-A', wobei anstelle des in Fig. 2c dargestellten zweiten Sicherheitselement-Teilelements das in Fig. 7a dargestellte zweite Sicher heitselement-Teilelement verwendet wird.

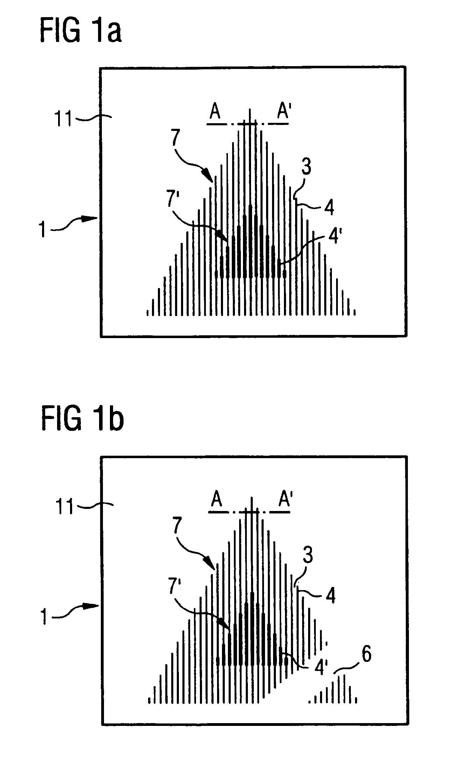

Fig. 1a zeigt ein erfindungsgemäßes Sicherheitselement 1 in einer Ansicht im Durchlicht. Das Sicherheitselement 1 weist mindestens folgende Schichten auf: ein transparentes Substrat 11, eine erste und eine zweite Funktionsschicht (Motivschichten), und eine Resistschicht, die die erste und die zweite Funktionsschicht verklebt. Die beiden Motivschichten haben in dem Ausführungsbeispiel die gleiche Größe und Form und bedecken das Trägersubstrat 11 nur teilweise. Natürlich können die Motivschichten das Trägersubstrat auch vollflächig bedecken. Außerdem kann eine der Motivschichten die andere Motivschicht nur teilweise bedecken oder mit ihr teilweise überlappen.

In der in Fig. 1a gezeigten Ausführungsform des erfindungsgemäßen Sicherheitselements bilden die beiden Motivschichten ein dreieckförmiges Muster 7 aus Linien 4, wobei die Linien 4 aus den mittels Resist verklebten Funktionsbereichen der Funktionsschichten (Motivschichten) gebildet werden. Die Linien 4 werden durch Aussparungen 3 getrennt, wobei die Aussparungen 3 durch die deckungsgleichen Aussparungen in den Funktionsbereichen und der Resistschicht gebildet werden. Die Linien 4 variieren in ihrer Breite y, wodurch in Durchsicht durch das Sicherheitselement ein Sub-Muster 7' wahrnehmbar wird, in der gezeigten Ausführungsform ein weiteres Dreieck.

Die Funktionsbereiche müssen natürlich nicht zwingend in Form paralleler Linien vorliegen, sondern können beliebige andere Formen haben.

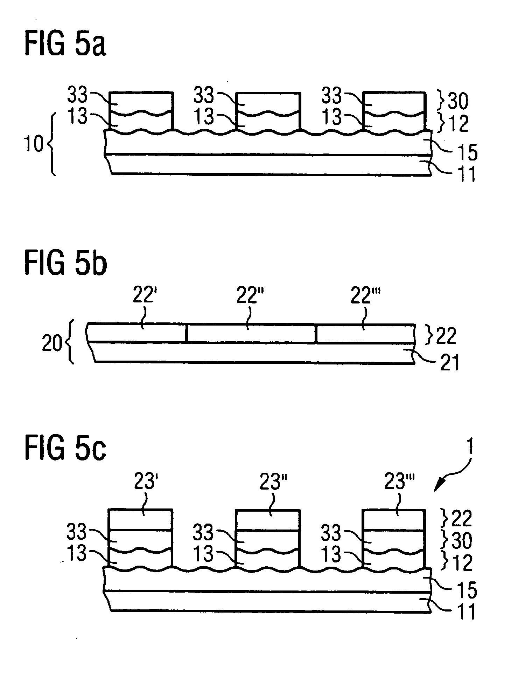

Welches Motiv ein Betrachter in vorderseitiger Auflichtansicht und in rückseitiger Auflichtansicht wahrnimmt, hängt von der speziellen Gestaltung der Funktionsbereiche der ersten und der zweiten Funktionsschicht ab und wird anhand der folgenden Figuren, die nicht beschränkende Beispiele für Motivschichten und Schichtabfolgen zeigen, erläutert. Fig. 1b zeigt eine spezielle Ausführungsform des in Fig. 1a dargestellten Sicherheitselements, bei dem eine der Funktionsschichten nur partiell ausgebildet ist. Diese Ausführungsform wird im Zusammenhang mit Fig. 5 näher erläutert.

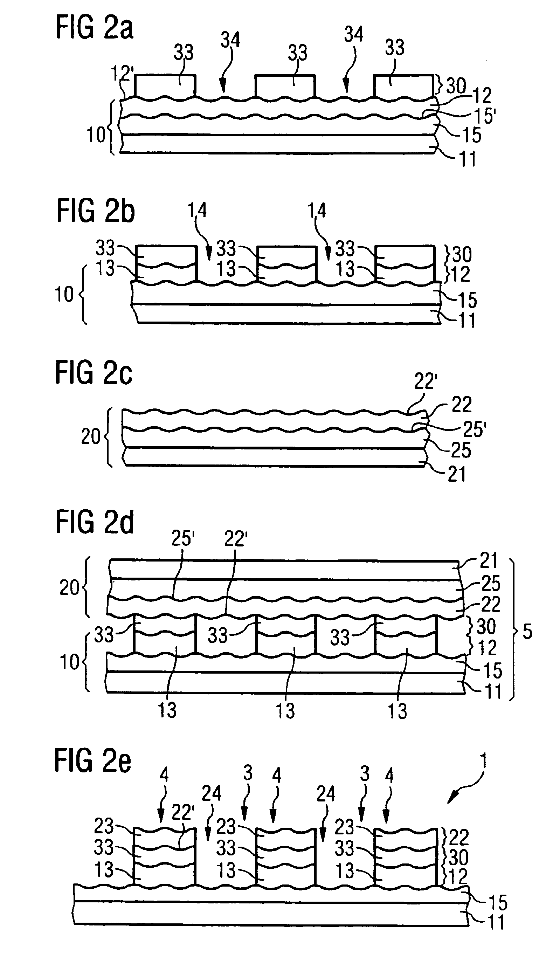

Fig. 2 veranschaulicht den Verfahrensablauf bei der Herstellung eines erfindungsgemäßen Sicherheitselements 1. Gezeigt ist ein Schnitt entlang der Linie A-A' des in Fig. 1a dargestellten Sicherheitselements, wobei jedoch nochmals betont werden soll, dass die Schichtfolge lediglich beispielhaft ist. Fig. 2a zeigt ein erstes Sicherheitselement-Teilelement 10, bestehend aus einem ersten Trägersubstrat 11, beispielsweise einer Folie aus PET, einer darauf aufgetragenen Prägelackschicht 15 mit eingeprägter Beugungsstruktur 15' mit einer goldfarbenen Metallisierung. Die Metallisierung bildet eine erste Funktionsschicht 12, auf der wiederum eine Schicht 30 aus thermoplastischem Resistlack in Form eines Musters mit Resistbereichen 33 und Aussparungen 34 dazwischen aufgedruckt ist. Die Beugungsstruktur 15' setzt sich in der Funktionsschicht als Beugungsstruktur 12' fort.

Fig. 2b zeigt dieselbe Darstellung wie Fig. 2a, jedoch nach Behandlung mit einem Ätzmittel. Durch das Ätzen wurden die nicht durch Resistbereiche 33 geschützten Bereiche der ersten Funktionsschicht 12 entfernt, während die durch Resistbereiche 33 geschützten Bereiche der ersten Funktionsschicht 12 erhalten blieben und die ersten Funktionsbereiche 13 bilden. Die ersten Funktionsbereiche 13 stellen eine exakte Reproduktion des Musters der Resistbereiche 33 dar.

Fig. 2c zeigt einen Schnitt durch das mit dem ersten Sicherheitselement-Teilelement 10 zu kombinierende zweite Sicherheitselement-Teilelement 20. Das zweite Sicherheitselement-Teilelement 20 besteht aus dem zweiten Trägersubstrat 21, der zweiten Funktionsschicht 22 und einer Prägelackschicht 25 dazwischen. In der Prägelackschicht 25 ist eine Beugungsstruktur 25' eingeprägt, die sich in der zweiten Funktionsschicht 22 als Beugungsstruktur 22' fortsetzt. Bei der zweiten Funktionsschicht 22 handelt es sich um eine silberfarbene Metallisierung. Der Prägelack 25 wurde vor dem Auftragen der Metallisierung 22 mit einer wässrigen Tensidlösung abgewaschen, so dass die Metallisierung 22 schlecht auf dem Prägelack haftet.

Fig. 2d zeigt, wie das erste Sicherheitselement-Teilelement 10 aus Fig. 2b und das zweite Sicherheitselement-Teilelement 20 aus Fig. 2c zu einem Verbund 5 zusammengesetzt werden.

Die beiden Teilelemente werden zusammengepresst, wodurch sich die Beugungsstruktur 22' der zweiten Funktionsschicht 22 in die Resistbereiche 33 überträgt, da es sich bei dem eingesetzten Resist um einen verformbaren, bevorzugt thermoplastischen Resistlack handelt. Mittels der Resistbereiche 33 werden das erste Sicherheitselement-Teilelement und das zweite Sicherheitselement-Teilelement miteinander verklebt. Bei den bevorzugt eingesetzten thermoplastischen Resistlacken wird mit Vorteil bei erhöhter Temperatur verklebt.

Das Zusammenpressen der beiden Sicherheitselemente-Teilelemente kann ein- oder mehrstufig erfolgen, d.h. die beiden Teilelemente werden vorzugsweise bei erhöhter Temperatur in einer Heizwalze mit einer (einstufiges Zusammenpressen) oder mehreren sogenannten Kalanderwalzen aneinandergepresst (mehrstufiges Zusammenpressen), oder aber die beiden Teilelemente werden an mehreren Heizwalzen, die jeweils mit einer oder mehreren sogenannten Kalanderwalzen ausgestattet sind, aneinandergepresst (mehrstufiges Zusammenpressen). Das mehrstufige Zusammenpressen kann, abhängig von der jeweiligen Ausführungsform, zu einer besonders festen Verbindung der Sicherhetiselement-Teilelemente führen. Beim Einsatz mehrerer Heizwalzen können auch Temperaturverläufe währen des Zusammenpressens realisiert werden.

Nach der Verklebung und gegebenenfalls nach einer gewissen Wartezeit zum Abkühlen und zur Stabilisierung der Klebeverbindung, werden das zweite Trägersubstrat 21 und die zweite Prägelackschicht 25 abgezogen, beispielsweise durch Trennwicklung. Das Ergebnis ist in Fig. 2e gezeigt. Mit dem ersten Sicherheitselement-Teilelement 10 verklebt wurden nur die Bereiche 23 der zweiten Funktionsschicht 22, die mit Resistbereichen 33 in Kontakt waren. Diese Bereiche bilden die zweiten Funktionsbereiche 23, die eine exakte Reproduktion des Musters der Resistbereiche 33 darstellen. Die übrigen Bereiche der zweiten Funktionsschicht 22 wurden zusammen mit dem zweiten Trägersubstrat und der Prägelackschicht abgezogen, während die mit den Resistbereichen 33 verklebten Bereiche 23 der zweiten Funktionsschicht 22 von der Prägelackschicht abgezogen wurden.

Die Bereiche 13, 33 und 23 sind jeweils exakt deckungsgleich und bilden in der Darstellung von Fig. 1a die Linien 4. Die Aussparungen 3 zwischen den Linien 4 sind ebenfalls exakt deckungsgleich und werden durch die Aussparungen 14 in der ersten Funktionsschicht 12, den Aussparungen 34 in der Resistschicht 30 und den Aussparungen 24 in der zweiten Funktionsschicht 22 gebildet.

Die Linien 4 (die durch die ersten Funktionsbereiche 13, die Resistbereiche 33 und die zweiten Funktionsbereiche 23 gebildet werden) sind in der in Fig. 2 dargestellten Ausführungsform jeweils Träger einer Beugungsstruktur. Die Beugungsstrukturen können beispielsweise Hologrammstrukturen sein, wobei bevorzugt in den ersten Funktionsbereichen 13 und den zweiten Funktionsbereichen 23 verschiedene Hologrammstrukturen vorliegen. In diesem Fall erkennt ein Betrachter in der Durchlichtansicht das in Fig. 1a gezeigte Linienmuster, in der vorderseitigen Auflichtansicht, betrachtet man die Seite des ersten Trägersubstrats 11 als die Vorderseite, das Hologramm der ersten Funktionsschicht 12, und in der rückseitigen Auflichtansicht das Hologramm der zweiten Funktionsschicht 22.

Als zweites Sicherheitselement-Teilelement kann beispielsweise auch eine Heißprägefolie eingesetzt werden. In diesem Fall würde bei der Trennwicklung nur das zweite Trägersubstrat 21 abgezogen werden, während die Prägelackschicht 25 auf dem gebildeten Sicherheitselement 1 verbleiben würde. Sie kann gleichzeitig als Schutzschicht dienen. Generell ist das Vorsehen einer Schutzschicht (in der Figur nicht gezeigt) über den zweiten Funktionsbereichen bzw. der zweiten Funktionsschicht sinnvoll, insbesondere deshalb wird z. B. die in Fig. 2e gezeigte Beugungsstruktur 22' bzw. die Abformung der Beugungsstruktur 25' in der Funktionsschicht 22 abgedeckt und ist damit Fälschungsangriffen nicht zugänglich.

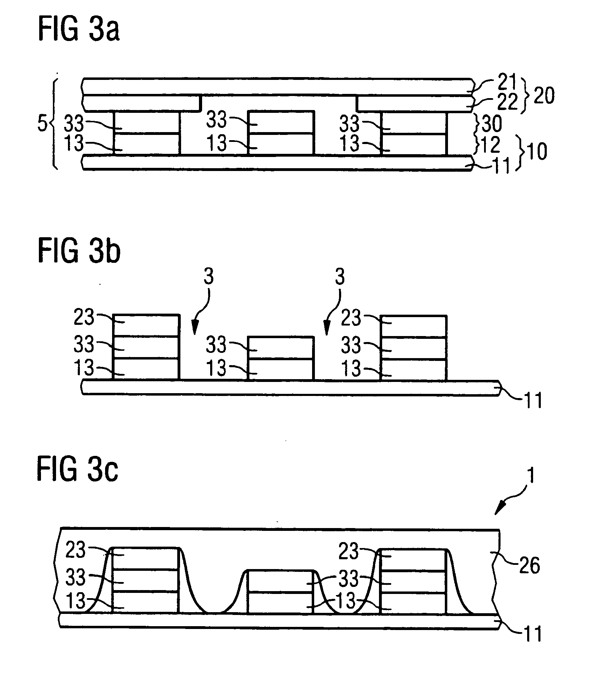

Die Figuren 3a bis 3c zeigen Schnittdarstellungen wie Fig. 2, wobei Fig. 3a dem Verfahrensstadium von Fig. 2b entspricht und Fig. 3b dem Verfahrensstadium von Fig. 2e entspricht. Bei dem in Fig. 3 dargestellten Sicherheitselement 1 besteht das erste Sicherheitselement-Teilelement 10 aus dem ersten Trägersubstrat 11 mit einer goldfarbenen Metallisierung 12. In der Metallisierung 12 werden erste Funktionsbereiche 13 ausgebildet, wie im Zusammenhang mit Fig. 2 erläutert. Das zweite Sicherheitselement-Teilelement 20 besteht aus dem zweiten Trägersubstrat 21 mit einer silberfarbenen Metallisierung 22 darauf. Wie aus Fig. 3a ersichtlich ist, ist die Metallisierung 22 nicht vollflächig ausgebildet, sondern bedeckt das Trägersubstrat 21 nur bereichsweise. Dadurch werden in dem Verbund 5 aus erstem Sicherheitselement-Teilelement 10 und zweitem Sicherheitselement-Teilelement 20 nicht alle Resistbereiche 32 mit silberfarbener Metallisierung 22 bedeckt.

Nach dem Verkleben und Abtrennen des zweiten Trägersubstrats 21 ergibt sich der in Fig. 3b gezeigte Aufbau. Ein Betrachter sieht hier in der Durchlichtansicht ein Linienmuster, wie es in Fig. 1a dargestellt ist, in der vorderseitigen Auflichtansicht (durch das erste Trägersubstrat 11 hindurch) ein goldfarbenes Linienmuster, (die ersten Funktionsbereiche 13), und in der rückseitigen Auflichtansicht ein Linienmuster aus silberfarbenen Linien (die zweiten Funktionsbereiche 23) und goldfarbenen Linien (die durch den farblosen Resist hindurch sichtbaren ersten Funktionsbereiche 13). Holografische Motive wie bei dem Sicherheitselement von Fig. 2 sind hier nicht erkennbar, da keine Prägeschichten mit Beugungsstruktur vorgesehen sind.

Selbstverständlich wäre es bei der Ausführungsform der Fig. 3 auch denkbar, einen farbigen Resist einzusetzen. Der Betrachter würde dann in der rückseitigen Auflichtansicht ein Linienmuster aus silberfarbenen Linien (die zweiten Funktionsbereiche 23) und farbige Linien in der für den Resist eingesetzten Farbe erkennen. Sofern Resists in verschiedenen Farben eingesetzt werden, würde der Betrachter in der rückseitigen Auflichtansicht ein Linienmuster aus silberfarbenen Linien (die zweiten Funktionsbereiche 23) und verschiedenfarbige Linien in den für die Resists eingesetzten Farben erkennen.

Fig. 3c zeigt das Sicherheitselement nach dem Beschichten mit einer Schutzschicht 26. Die Schutzschicht 26 bedeckt die zweiten Funktionsbereiche 23 und füllt die Aussparungen 3 zumindest teilweise auf.

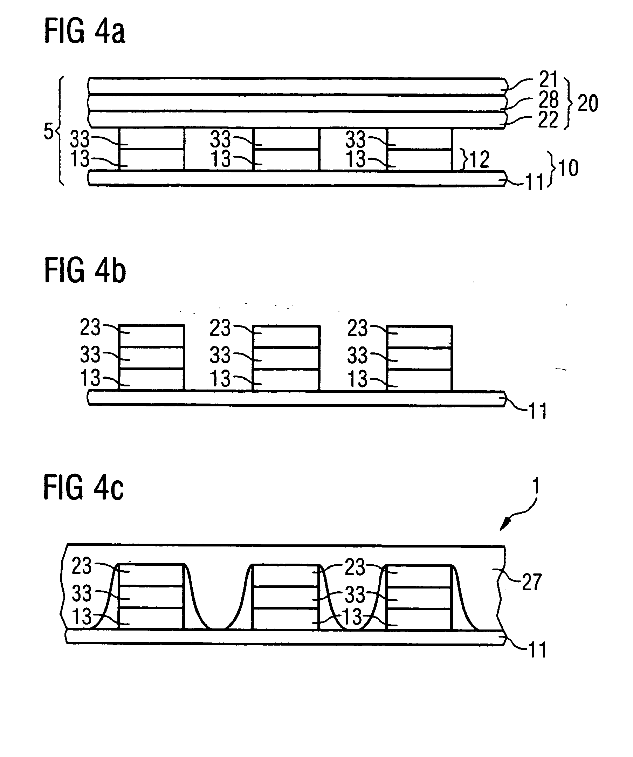

Die Figuren 4a bis 4c zeigen Schnittansichten wie die Figuren 3a bis 3c, also Verfahrensstadien bei der Herstellung des Sicherheitselements, wie sie im Zusammenhang mit Fig. 2d und Fig. 2e erläutert wurden.

Bei der Ausführungsform gemäß Fig. 4 besteht das erste Sicherheitselement-Teilelement 10 aus einem transparenten Trägersubstrat 11 mit einer goldfarbenen Metallisierung 12, in der erste Funktionsbereiche 13 ausgebildet sind. Über den ersten Funktionsbereichen 13, deckungsgleich mit diesen, befinden sich Resistbereiche 33. Die Resistbereiche 33 bestehen aus farblosem Resistlack. Das zweite Sicherheitselement-Teilelement 20 besteht aus dem zweiten Trägersubstrat 21 mit einer Funktionsschicht 22 aus schwarzer Farbe (beispielsweise Microlith-Schwarz von Ciba in Ethylacetat), wobei die schwarze Farbe zur besseren Ablösbarkeit nicht auf das Trägersubstrat, sondern auf eine haftungsverringernde Schicht 28 aufgedruckt ist. Die haftungsverringernde Schicht 28 ist eine Aluminium-Metallisierung der Folie 21.

Das erste Sicherheitselement-Teilelement 10 und das zweite Sicherheitselement-Teilelement 20 werden zu einem Verbund 5 zusammengesetzt, wie in Fig. 4a gezeigt. Unter Druck und erhöhter Temperatur verbinden sich die Funktionsschichten 12 und 22 an den Stellen, an denen sich Resistbereiche 33 zwischen ihnen befinden. Beim Trennen der Folien bleibt die schwarze Farbe an den Resistbereichen 33 haften und wird in den übrigen Bereichen entfernt. Man erhält den in Fig. 4b gezeigten Aufbau.

Anschließend erfolgt eine Beschichtung mit einer Schicht mit FarbkippEffekt, beispielsweise einer Flüssigkristall-Schicht 27, insbesondere einer Schicht aus cholesterischem flüssigkristallinen Material. Das mit der Flüssigkristall-Schicht 27 beschichtete Sicherheitselement 1 ist in Fig. 4c dargestellt. Bei dieser Ausführungsform sieht ein Betrachter in der Durchlichtansicht ein Linienmuster, in der vorderseitigen Auflichtansicht (durch das transparente Trägersubstrat 11 hindurch) ein goldfarbenes Linienmuster, nämlich die ersten Funktionsbereiche 13, und in der rückseitigen Auflichtansicht ein Linienmuster mit Farbkipp-Effekt. Der Farbkipp-Effekt ist nur in den Bereichen sichtbar, die sich über den zweiten Funktionsbereichen 23 aus schwarzer Farbe befinden. In den übrigen Bereichen ist der Farbkipp-Effekt mangels Kontrast nicht oder nur sehr schwach sichtbar. Anstelle der goldfarbenen Metallisierung 12 kann selbstverständlich auch eine silberfarbene Metallisierung 12 aus z. B. Chrom oder Aluminium vorgesehen sein, so dass der Betrachter in der vorderseitigen Auflichtansicht (durch das transparente Trägersubstrat 11 hindurch) ein silberfarbenes Linienmuster wahrnimmt.

Anstelle einer schwarzen Druckfarbe kann vorteilhaft auch eine dunkle Funktionsfarbe verwendet werden, beispielsweise eine Magnetfarbe. Mit einer dunklen Magnetfarbe ist ein vergleichbar guter Kontrast erzielbar und man erhält den zusätzlichen Vorteil eines maschinell nachweisbaren Sicherheitsmerkmals.

In Fig. 5 ist eine weitere Ausführungsform eines erfindungsgemäßen Sicherheitselements 1 dargestellt. Der in Fig. 5a gezeigte Aufbau des ersten Sicherheitselement-Teilelements 10 ist identisch mit dem in Fig. 2b gezeigten Aufbau des ersten Sicherheitselement-Teilelements 10.

Fig. 5b zeigt einen Schnitt durch das zweite Sicherheitselement-Teilelement 20, das in dieser Ausführungsform aus einem Trägersubstrat 21 und einer mehrfarbigen Motivschicht 22 besteht. Die mehrfarbige Motivschicht besteht beispielsweise aus verschiedenfarbigen Teilbereichen 22', 22" und 22"', die zusammen eine geometrische oder figürliche Darstellung bilden. Die zweite Motivschicht 22 ist beispielsweise aufgedruckt.

Fig. 5c zeigt das Sicherheitselement 1, nachdem das in Fig. 5a gezeigte erste Sicherheitselement-Teilelement und das in Fig. 5b gezeigte zweite Sicherheitselement-Teilelement zu einem Verbund 5 zusammengesetzt und das zweite Trägersubstrat 21 abgetrennt wurde. Bei diesem Sicherheitselement erkennt ein Betrachter in der Durchlichtansicht wiederum ein Linienmuster, in der vorderseitigen Auflichtansicht ein holografisches Motiv (erzeugt durch die ersten Funktionsbereiche 13 mit Hologrammstruktur-Information), und in der rückseitigen Auflichtansicht ein mehrfarbiges Motiv (erzeugt durch die verschiedenfarbigen zweiten Funktionsbereiche 23', 23", 23"'). Das mehrfarbige Motiv kann alternativ auch erzeugt werden, indem das in Fig. 5a gezeigte erste Sicherheitselement-Teilelement mit Resistbereichen 33 nacheinander mit mehreren zweiten Sicherheitselement-Teilelementen mit verschiedenfarbigen Funktionsschichten 22 verklebt und die Trägersubstrate 21 abgezogen werden. Bei der sukzessiven Beschichtung mittels mehrerer Spenderfolien darf die Beschichtung 22 jeweils nur partiell ausgebildet sein. Ansonsten ergeben sich zweite Funktionsbereiche 23', 23" und 23"' mit Mischfarben.

Als eine weitere Alternative kann ein farbiger Resistlack verwendet werden. Ein farbiger Resistlack, bei dem nur ein Teil der Resistbereiche 33 mit einer andersfarbigen Motivschicht 22 verklebt wird, führt ebenfalls zu einem mehrfarbigen Motiv (erkennbar in rückseitiger Auflichtansicht). Denkbar ist ferner, wie bereits mit Bezug zu Fig. 3 erwähnt, die Verwendung von Resisten mit verschiedenen Farben, wodurch ebenfalls interessante und schwer zu fälschende Sicherheitselemente erhalten werden können.

Die in Fig. 1b dargestellte Ansicht eines erfindungsgemäßen Sicherheitselements erhält man, wenn man das in Fig. 5c dargestellte Sicherheitselement in Aufsicht auf die zweite Funktionsschicht 22 betrachtet, wobei die Funktionsbereiche 23 in dem in Fig. 1b mit 6 bezeichneten Bereich dieselbe Farbe haben wie der Untergrund, gegen den das Sicherheitselement betrachtet wird. Die übrigen Funktionsbereiche 23 haben eine Farbe, die sich gegen den Untergrund abhebt, während in dem Bereich 6 das Motiv der zweiten Funktionsschicht 22 in Aufsicht praktisch nicht mehr wahrnehmbar ist. Bei einem weißen Untergrund wäre daher der Bereich 6 als weiße Funktionsschicht auszubilden. Dies lässt sich einfach realisieren, indem ein farbiger Resistlack verwendet wird und dieser nur bereichsweise mit einer deckenden weißen zweiten Funktionsschicht 22 verklebt wird. Bevorzugt wird darauf eine Schutzschicht aufgetragen. Farbige Resistlacke sind jedoch allgemein gegenüber farblosen Resistlacken weniger bevorzugt, da der Farbstoffgehalt ihre Haftkraft beeinträchtigt.

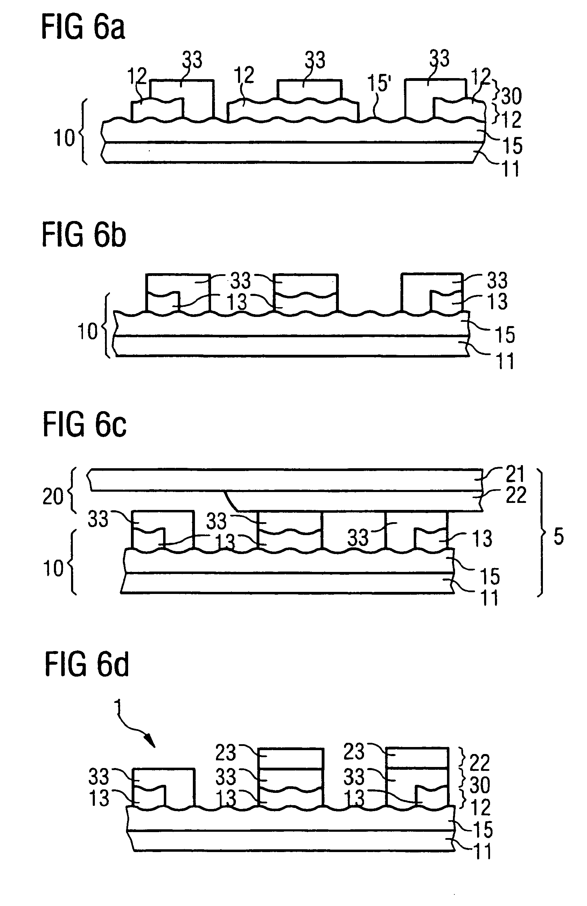

Die Figuren 6a bis 6d zeigen die Herstellung einer weiteren Ausführungsform eines erfindungsgemäßen Sicherheitselements 1. In Fig. 6a ist ein Schnitt durch das erste Sicherheitselement-Teilelement 10 dargestellt. Es besteht aus dem ersten Trägersubstrat 11, einer Prägelackschicht 15 mit Beugungsstruktur 15' und einer ersten Funktionsschicht 12, bestehend aus einer Metallisierung, die Teilbereiche der Prägelackschicht 15 bedeckt. Auf der Metallisierung 12 ist ein farbiger Resistlack 30 aufgetragen, wobei die Resistlackbereiche 33 die metallisierten Bereiche 12 teilweise überlappen, d. h. der Resistlack befindet sich zum Teil auf der Metallisierung und zum Teil direkt auf der Prägelackschicht. Wird die nicht durch Resistbereiche 33 geschützte Metallisierung entfernt, erhält man das Sicherheitselement-Teilelement, das in Fig. 6b gezeigt ist. In Aufsicht (durch das Trägersubstrat 11 hindurch) erkennt der Betrachter ein Hologramm (erste Funktionsbereiche 13 mit Beugungsstruktur) und zusätzlich farbige Bereiche (bedingt durch den farbigen Resist 33). Die Resistbereiche 33 können nun zusätzlich mit einer weiteren Farbschicht verklebt werden, wie in Fig. 6c dargestellt. Fig. 6c zeigt, wie ein zweites Sicherheitselement-Teilelement, bestehend aus einem Trägersubstrat 21, das partiell mit einer Farbschicht 22 beschichtet ist, mit dem Sicherheitselement-Teilelement von Fig. 6b verklebt wird. Nach dem Abziehen der Folie 21 erhält man das Sicherheitselement mit dem in Fig. 6d gezeigten Aufbau. Ein Betrachter, der das in Fig. 6d dargestellte Sicherheitselement in Durchlichtansicht betrachtet, erkennt konturenscharfe Linien mit Aussparungen dazwischen. In vorderseitiger Auflichtansicht (durch die Folie 11 hindurch) sind das Hologrammmotiv und zusätzlich farbige Bereiche zu erkennen, wie oben für Fig. 6b beschrieben. In der rückseitigen Auflichtansicht sind die metallisierten Bereiche 13 nicht mehr zu erkennen, da sie exakt durch farbigen Resist oder zusätzlich durch die farbigen zweiten Funktionsbereiche 23 abgedeckt werden. Von dieser Seite her erkennt man daher ein mehrfarbiges Motiv in den Farben des Resists und der zweiten Funktionsschicht. Die zweite Funktionsschicht kann natürlich ein mehrfarbiges Motiv bilden, so dass das erkennbare Gesamtmotiv mehr als zwei Farben aufweist. Auch können Resistlacke unterschiedlicher Farben eingesetzt werden, was ebenfalls eine sehr große Zahl an verschiedenfarbigen Motiven zulässt, was die Fälschungssicherheit deutlich erhöht.

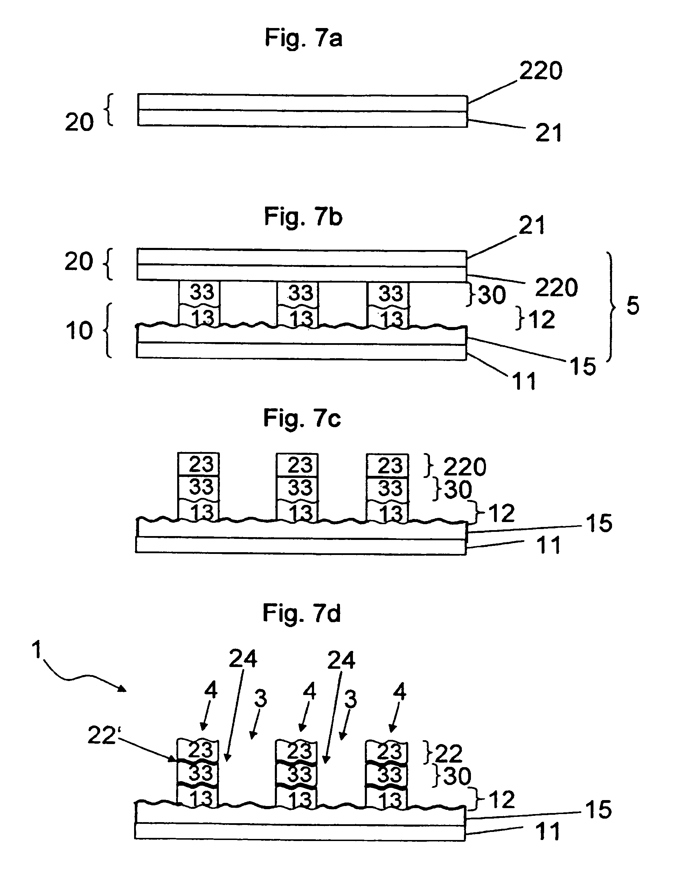

Fig. 7 veranschaulicht einen alternativen Verfahrensablauf bei der Herstellung eines erfindungsgemäßen Sicherheitselements 1, in dem anstelle des in Fig. 2c gezeigten zweiten Sicherheitselement-Teilelements 20 das in Fig. 7a gezeigte zweite Sicherheitselement-Teilelement 20 verwendet wird.

Fig. 7a zeigt einen Schnitt durch das zweite Sicherheitselement-Teilelement 20, das mit dem in Fig. 2b gezeigten ersten Sicherheitselement-Teilelement 10 zu kombinieren ist. Das in Fig. 7a gezeigte zweite Sicherheitselement-Teilelement 20 ist eine Metallspendefolie ohne Prägung, die ein zweites Trägersubstrat 21 und eine darauf erzeugte Metallisierung 220 aufweist.

Fig. 7b zeigt, wie das erste Sicherheitselement-Teilelement 10 aus Fig. 2b und das zweite Sicherheitselement-Teilelement 20 aus Fig. 7a zu einem Verbund 5 zusammengesetzt werden.

Nach der Verklebung wird das zweite Trägersubstrat 21 abgezogen, beispielsweise durch Trennwicklung. Das Ergebnis ist in Fig. 7c gezeigt. Mit dem ersten Sicherheitselement-Teilelement 10 verklebt wurden nur die Bereiche 23 der Metallisierung 220, die mit Resistbereichen 33 in Kontakt waren. Diese Bereiche sind zum Ausbilden von Beugungsstrukturen geeignete Bereiche 23, die eine exakte Reproduktion des Musters der Resistbereiche 33 darstellen. Die übrigen Bereiche der Metallisierung 220 wurden zusammen mit dem zweiten Trägersubstrat abgezogen, während die mit den Resistbereichen 33 verklebten Bereiche 23 der Metallisierung 220 von dem Trägersubstrat abgezogen wurden.

Anschließend werden die in Fig. 7c dargestellten, zum Ausbilden von Beugungstrukturen geeigneten Bereiche 23 beispielsweise durch Prägen zu metallisierten Beugungsstrukturen ausgebildet. Das Ergebnis ist in Fig. 7d gezeigt. Die Linien 4 sind jeweils Träger einer Beugungsstruktur. Die Beugungsstrukturen können beispielsweise Hologrammstrukturen sein, wobei bevorzugt in den ersten Funktionsbereichen 13 und den zweiten Funktionsbereichen 23 verschiedene Hologrammstrukturen vorliegen.

Das erfindungsgemäße Verfahren erlaubt eine passergenaue und kantenscharfe Ausbildung feinster Strukturen mit einer Breite bzw. einem Durchmesser von etwa 50 µm oder weniger.

Abschließend werden noch einige spezielle Ausführungsformen der vorliegenden Erfindung erläutert.

Vorstehend wurde die vorliegende Erfindung stets im Zusammenhang mit einem transparenten oder transluzenten ersten Trägersubstrat beschrieben. Alternativ kann auch ein opakes erstes Trägersubstrat verwendet werden, wodurch jedoch die Negativschrift schlecht erkennbar wird, und auch nur noch eine der beiden Auflichtansichten gut erkennbar ist, nämlich die vorstehend als rückseitige Auflichtansicht bezeichnete Ansicht. Ein opakes Trägersubstrat 11 ist daher weniger bevorzugt.

Gemäß einer weiteren Variante kann auf die Ausbildung von Aussparungen 14 in der ersten Funktionsschicht 12 verzichtet werden, das erste Sicherheitselement-Teilelement 10 also in der beispielsweise in Fig. 2a gezeigten Form mit dem zweiten Sicherheitselement-Teilelement 20 verklebt werden. In diesem Fall wird das Muster der Resistschicht 30 nur in der zweiten Funktionsschicht 22 exakt reproduziert, was jedoch ebenfalls zu sehr befriedigenden Ergebnissen mit gut sichtbarer Negativschrift führen kann, beispielsweise dann, wenn die erste Funktionsschicht 12 als transparente Farbe ausgebildet ist.

Gemäß einer weiteren Variante kann ein erstes Sicherheitselement-Teilelement 10 mit deckungsgleichen ersten Funktionsbereichen 13 und Resistbereichen 33 mit einem zweiten Sicherheitselement-Teilelement 20 verklebt werden, dessen zweite Funktionsschicht 22 bereits ein Muster aufweist, das jedoch nicht mit dem Muster der ersten Funktionsschicht 13 und der Resistbereiche 33 übereinstimmt. Betrachtet man zur Veranschaulichung einen Fall, in dem die ersten Funktionsbereiche 13 und die Resistbereiche 33 ein Linienmuster wie in Fig. 1a bilden, wobei eine Verklebung mit einer zweiten Funktionsschicht 22 erfolgt, die ein dazu senkrechtes Linienmuster paralleler Linien aufweist, so ergibt sich ein Sicherheitselement 1 mit punktförmigen zweiten Funktionsbereichen 23. Die zweiten Funktionsbereiche 23 sind dann wie Perlen an einer Schnur auf den durch die ersten Funktionsbereiche gebildeten Linien "aufgereiht". In Aufsicht auf die zweiten Funktionsbereiche erkennt der Betrachter Linien mit Punkten.

Noch weitere Variationsmöglichkeiten ergeben sich, wenn sowohl die erste Funktionsschicht 12, als auch die Resistschicht 30, als auch die zweite Funktionsschicht 22 verschiedene Muster aufweisen. Es wird nun als Beispiel der Fall betrachtet, in dem das erste Sicherheitselement-Teilelement 10 Funktionsbereiche 13 in Form kreisförmiger konzentrischer Linien aufweist. Die erste Funktionsschicht 12 wird mit einer Resistschicht 30 in Form paralleler gerader Linien 33 bedruckt. Darauf aufgeklebt wird ein zweites Sicherheitselement-Teilelement 20, in dessen zweiter Funktionsschicht 22 ein Muster von Funktionsbereichen 23 in Form ebenfalls paralleler gerader Linien ausgebildet ist, die mit den Resistbereich-Linien 33 einen Winkel bilden. Die zweiten Funktionsbereiche 23 verkleben mit dem ersten Sicherheitselement-Teilelement 10 in den Bereichen, in denen sie über Resistbereichen 33 zu liegen kommen. In Aufsicht auf die zweite Funktionsschicht sieht ein Betrachter dann, nach dem Abtrennen des zweiten Trägersubstrats 21, das kreisförmige Muster der ersten Funktionsschicht mit durch die zweite Funktionsschicht gebildeten punktförmigen Bereichen. Wird ein farbiger Resist verwendet, sind zusätzlich die Resistlinien 33 erkennbar.

Allen erfindungsgemäßen Sicherheitselementen ist gemeinsam, dass zwei ihrer Funktionsschichten mittel eines Resists direkt miteinander verklebt sind, wobei mindestens das Muster einer Funktionsschicht, bevorzugt auch das Muster der anderen Funktionsschicht, zumindest zum Teil durch das Muster der Resistschicht bedingt ist.

Die erfindungsgemäßen Sicherheitselemente können in Form von Transfermaterialien, d. h. Folien oder Bändern mit einer Vielzahl von fertigen und für den Transfer vorbereiteten Sicherheitselementen, bereitgestellt werden. Bei einem Transfermaterial wird der Schichtaufbau des späteren Sicherheitselements in der umgekehrten Reihenfolge, in der der Schichtaufbau später auf einem zu sichernden Wertgegenstand vorliegen soll, auf einem Trägermaterial vorbereitet, wobei der Schichtaufbau des Sicherheitselements in Endlosform oder bereits in der endgültigen als Sicherheitselement verwendeten Umrissform auf dem Trägermaterial vorbereitet werden kann. Der Übertrag des Sicherheitselements auf den zu sichernden Wertgegenstand erfolgt mit Hilfe einer Klebstoffschicht, die typischerweise auf dem Transfermaterial vorgesehen ist, aber auch auf dem Wertgegenstand vorgesehen werden kann. Vorzugsweise wird hierfür ein Heißschmelzkleber verwendet. Wird das Sicherheitselement in Endlosform vorbereitet, kann zur Übertragung entweder nur in den zu übertragenden Bereichen des Sicherheitselements eine Klebstoffschicht vorgesehen werden, oder der Klebstoff wird nur in den zu übertragenden Bereichen aktiviert. Das Trägermaterial der Transferelemente wird während oder nach ihrer Übertragung auf den Wertgegenstand meist von dem Schichtaufbau der Sicherheitselemente abgezogen. Um das Ablösen zu erleichtern, kann zwischen dem Trägermaterial und dem abzulösenden Teil der Sicherheitselemente eine Trennschicht (Releaseschicht) vorgesehen werden. Gegebenenfalls kann das Trägermaterial auch auf dem übertragenen Sicherheitselement verbleiben.

Die erfindungsgemäßen Sicherheitselemente können zur Echtheitssicherung von Waren beliebiger Art verwendet werden. Bevorzugt werden sie zur Echtheitssicherung von Wertdokumenten eingesetzt, beispielsweise bei Banknoten, Schecks oder Ausweiskarten. Dabei können sie auf einer Oberfläche des Wertdokuments angeordnet werden oder ganz oder teilweise in das Wertdokument eingebettet werden. Mit besonderem Vorteil werden sie bei Wertdokumenten mit Loch zur Lochabdeckung benutzt. Hierbei können die Vorteile der erfindungsgemäßen Sicherheitselemente mit transparenten Trägersubstraten und von beiden Seiten des Wertdokuments zu betrachtenden, sorgfältig gepasserten Motiven, besonders schön zur Geltung kommen. Auch Negativschriften mit feinsten Strukturen und Sub-Muster können im Durchlicht deutlich erkannt werden. Sie sind in der erfindungsgemäß erreichbaren Präzision von einem Fälscher praktisch nicht nachahmbar. Auch ein Ablösen der Sicherheitselemente, um sie auf einen anderen Wertgegenstand zu übertragen, ist praktisch nicht möglich, denn die erfindungsgemäßen Sicherheitselemente enthalten stets mindestens zwei Klebstoffschichten, d. h. sie enthalten eine klebende Resistschicht und sind mit einer Klebstoffschicht mit dem zu sichernden Wertgegenstand verbunden. Verwendet man für die Verklebung des Sicherheitselements mit dem Wertgegenstand einen Klebstoff, der hinsichtlich seiner chemischen und physikalischen Eigenschaften dem Resistlack im Schichtaufbau des Sicherheitselements ähnlich ist, wird bei Ablöseversuchen stets der Schichtaufbau des Sicherheitselements zerstört.

## Patentansprüche

1. Verfahren zur Herstellung eines Sicherheitselements (1) mit Negativschrift (3) für ein Sicherheitspapier oder einen Wertgegenstand, insbesondere ein Wertdokument, folgende Schritte aufweisend:
a) Herstellen eines ersten Sicherheitselements-Teilelements (10) durch
- Bereitstellen eines ersten transparenten oder transluzenten Trägersubstrats (11),
- Auftragen einer ersten Funktionsschicht (12) auf das erste Trägersubstrat (11) oder auf eine vorher aufgetragene Zwischenschicht (15),
- Auftragen einer Resistschicht (30) auf die erste Funktionsschicht (12)
- in Form eines vorbestimmten Musters (7) mit Resistbereichen (33) und Aussparungen (34) zwischen den Resistbereichen,
- Entfernen der nicht durch Resistbereiche (33) geschützten Bereiche der ersten Funktionsschicht (12), um erste Funktionsbereiche (13) und erste Aussparungen (14) dazwischen zu bilden,
b) Herstellen eines zweiten Sicherheitselement-Teilelements (20) durch
- Bereitstellen eines zweiten Trägersubstrats (21),
- Auftragen einer zweiten Funktionsschicht (22) auf das zweite Trägersubstrat (21) oder auf eine vorher aufgetragene Zwischenschicht (25),
c) Zusammensetzung des ersten (10) und des zweiten (20) Sicherheitselement-Teilelements zu einem Verbund (5) dergestalt, dass die Resistschicht (30) und die zweite Funktionsschicht (22) zueinander weisen, und Verkleben des ersten (10) und des zweiten (20) Sicherheitselement-Teilelements, bevorzugt unter erhöhtem Druck und erhöhter Temperatur, und
d) Abtrennen des zweiten Trägersubstrats (21) von dem verklebten Verbund (5), wobei die zweite Funktionsschicht (22) unter Ausbildung von zweiten Funktionsbereichen (23) an den Resistbereichen (33) haften bleibt, während die übrigen Bereiche der zweiten Funktionsschicht (22) zusammen mit dem zweiten Trägersubstrat (21) abgetrennt werden, wodurch in der zweiten Funktionsschicht (22) zweite Aussparungen (24) ausgebildet werden, die zusammen mit den Aussparungen (34) in der Resistschicht (30) und den ersten Aussparungen (14) in der ersten Funktionsschicht (12) die Negativschrift (3) bilden.

2. Verfahren nach Anspruch 1, **dadurch gekennzeichnet, dass** das erste Sicherheitselement-Teilelement (10) hergestellt wird durch
- Bereitstellen des ersten Trägersubstrats (11),
- Auftragen einer ersten Prägelackschicht (15) als Zwischenschicht auf das erste Trägersubstrat (11),
- Auftragen einer ersten Metallisierung (12) als erste Funktionsschicht auf die erste Prägelackschicht (15),
- Prägen der ersten Prägelackschicht (15) vor oder nach dem Auftragen der ersten Metallisierung (12),
- Auftragen der Resistschicht (30) auf die erste Metallisierung (12), wobei die Resistschicht Resistbereiche (33) und Aussparungen (34) aufweist oder in ihr Resistbereiche (33) und Aussparungen (34) gebildet werden, und
- Ausbilden von ersten Aussparungen (14) in der ersten Metallisierung (12) durch Entfernen der nicht durch Resistbereiche (33) geschützten Bereiche der ersten Metallisierung (12).

3. Verfahren nach Anspruch 1 oder 2, **dadurch gekennzeichnet, dass** das zweite Sicherheitselement-Teilelement (20) hergestellt wird durch
- Bereitstellen des zweiten Trägersubstrats (21),
- Auftragen einer zweiten Prägelackschicht (25) als Zwischenschicht auf das zweite Trägersubstrat (21),
- Auftragen einer zweiten Metallisierung (22) als zweite Funktionsschicht auf die zweite Prägelackschicht (25),
- Prägen der zweiten Prägelackschicht (25) vor oder nach dem Auftragen der zweiten Metallisierung (22).

4. Verfahren nach einem der Ansprüche 1 bis 3, **dadurch gekennzeichnet, dass** als erste Funktionsschicht (12) und/oder als zweite Funktionsschicht (22) eine Farbschicht aufgetragen wird, wobei die Farbschicht gegebenenfalls mehrfarbig ist.

5. Verfahren nach einem der Ansprüche 1 bis 4, **dadurch gekennzeichnet, dass** die erste Funktionsschicht (12) und/ oder die zweite Funktionsschicht (22) nur in Teilbereichen aufgetragen wird (werden), und der Vorgang des Verklebens des ersten (10) und des zweiten (20) Sicherheitselement-Teilelements und des Abtrennens des zweiten Trägersubstrats (21) nacheinander mit mindestens zwei zweiten Sicherheitselement-Teilelementen (20) durchgeführt wird, wodurch in der zweiten Funktionsschicht (22) des Sicherheitselements (1) unterschiedliche zweite Funktionsbereiche (23) ausgebildet werden.

6. Verfahren nach einem der Ansprüche 1 bis 5, **dadurch gekennzeichnet, dass** die Resistbereiche (33) als Linien (4) einer definierten Breite y ausgebildet werden.

7. Verfahren nach einem der Ansprüche 1 bis 6, **dadurch gekennzeichnet, dass** die Resistschicht (30) als ein Muster (7) aufgetragen wird, in dem die Resistbereiche (33) und die Aussparungen (34) außerdem ein Sub-Muster (7') bilden.

8. Sicherheitselement (1) mit Negativschrift (3) zur Anbringung an oder zumindest teilweisen Einbringung in ein Sicherheitspapier oder einen Wertgegenstand, insbesondere ein Wertdokument, das nach einem Verfahren gemäß einem der Ansprüche 1 bis 8 erhältlich ist und aus mehreren Schichten aufgebaut ist, die sich jeweils über das gesamte Sicherheitselement (1) oder über Teilbereiche des Sicherheitselements erstrecken, wobei die Schichten mindestens die folgenden aufweisen:
- ein transparentes oder transluzentes Trägersubstrat (11),
- eine Resistschicht (30) mit Resistbereichen (33) und Aussparungen (34), die ein vorbestimmtes Muster (7) bilden,
- eine erste Funktionsschicht (12), mit ersten Funktionsbereichen (13) und ersten Aussparungen (14), die ein Muster bilden, das durch das Muster (7) der Resistschicht (30) bedingt ist,
- eine zweite Funktionsschicht (22) mit zweiten Funktionsbereichen (23) und zweiten Aussparungen (24), die ein Muster bilden, das zumindest teilweise durch das Muster (7) der Resistschicht (30) bedingt ist,
wobei
- die Resistbereiche (33) die erste Funktionsschicht (12) und die zweite Funktionsschicht (22) unmittelbar miteinander verkleben.

9. Sicherheitselement (1) nach Anspruch 8, **dadurch gekennzeichnet, dass** die erste Funktionsschicht (12) erste Funktionsbereiche (13) und erste Aussparungen (14), die ein Muster (7) bilden, das durch das Muster (7) der Resistschicht bedingt ist, aufweist, und die Resistbereiche (33) die ersten (13) und zweiten (23) Funktionsbereiche unmittelbar miteinander verkleben, die ersten (13) und zweiten (23) Funktionsbereiche und die Resistbereiche (33), in Aufsicht auf das Sicherheitselement eingesehen, deckungsgleich sind, und die ersten (14) und die zweiten (24) Aussparungen und die Aussparungen (34) in der Resistschicht (30) deckungsgleich sind und die Negativschrift (3) bilden.

10. Sicherheitselement (1) nach Anspruch 8 oder 9, **dadurch gekennzeichnet, dass** es zwischen dem ersten Trägersubstrat (11) und der ersten Funktionsschicht (12) mindestens eine Zwischenschicht (15) und/oder auf der zweiten Funktionsschicht (22) mindestens eine Zwischenschicht (25) aufweist.

11. Sicherheitselement (1) nach einem der Ansprüche 8 bis 10, **dadurch gekennzeichnet, dass** es auf der zweiten Funktionsschicht (22) mindestens eine weitere Schicht (26; 27) aufweist.

12. Sicherheitselement (1) nach Anspruch 11, **dadurch gekennzeichnet, dass** die mindestens eine weitere Schicht eine Schicht (27) mit Farbkippeffekt und/oder eine Schutzschicht (26) ist.

13. Transfermaterial zur Übertragung von Sicherheitselementen auf ein Sicherheitspapier oder einen Wertgegenstand wie ein Wertdokument, **dadurch gekennzeichnet, dass** es eine Vielzahl an als Transferelemente ausgebildeten Sicherheitselementen (1) nach einem der Ansprüche 8 bis 12 aufweist.

14. Sicherheitspapier oder Wertgegenstand, wie ein Wertdokument, **dadurch gekennzeichnet, dass** es (er) ein Sicherheitselement (1) nach einem der Ansprüche 8 bis 12 aufweist.

15. Verfahren zur Herstellung eines Sicherheitspapiers oder eines Wertgegenstands, wie eines Wertdokuments, **dadurch gekennzeichnet, dass** ein Sicherheitselement (1) nach einem der Ansprüche 8 bis 12 darauf aufgebracht oder zumindest teilweise darin eingebracht wird.

## Claims

1. A method for producing a security element (1) with negative writing (3) for a security paper or an object of value, in particular a value document, having the following steps:
a) producing a first security-element partial element (10) by
- supplying a first transparent or translucent carrier substrate (11),
- applying a first functional layer (12) to the first carrier substrate (11) or to a previously applied intermediate layer (15),
- applying a resist layer (30) to the first functional layer (12)
- in the form of a predetermined pattern (7) with resist areas (33) and gaps (34) between the resist areas,
- removing the areas of the first functional layer (12) not protected by resist areas (33) in order to form first functional areas (13) and first gaps (14) therebetween,
b) producing a second security-element partial element (20) by
- supplying a second carrier substrate (21),
- applying a second functional layer (22) to the second carrier substrate (21) or to a previously applied intermediate layer (25),
c) assembling the first (10) and the second (20) security-element partial elements to a composite (5) such that the resist layer (30) and the second functional layer (22) face each other, and bonding the first (10) and the second (20) security-element partial elements, preferably under elevated pressure and elevated temperature, and
d) detaching the second carrier substrate (21) from the bonded composite (5), whereby the second functional layer (22) adheres to the resist areas (33) so as to form second functional areas (23), while the remaining areas of the second functional layer (22) are detached together with the second carrier substrate (21), thereby forming in the second functional layer (22) second gaps (24) which, together with the gaps (34) in the resist layer (30) and the first gaps (14) in the first functional layer (12), form the negative writing (3).

2. The method according to claim 1, **characterized in that** the first security-element partial element (10) is produced by
- supplying the first carrier substrate (11),
- applying a first embossing lacquer layer (15) as an intermediate layer to the first carrier substrate (11),
- applying a first metallization (12) as the first functional layer to the first embossing lacquer layer (15),
- embossing the first embossing lacquer layer (15) before or after applying the first, metallization (12),
- applying the resist layer (30) to the first metallization (12), whereby the resist layer has resist areas (33) and gaps (34), or resist areas (33) and gaps (34) are formed therein, and
- forming first gaps (14) in the first metallization (12) by removing the areas of the first metallization (12) not protected by resist areas (33).

3. The method according to claim 1 or 2, **characterized in that** the second security-element partial element (20) is produced by
- supplying the second carrier substrate (21),
- applying a second embossing lacquer layer (25) as an intermediate layer to the second carrier substrate (21),
- applying a second metallization (22) as the second functional layer to the second embossing lacquer layer (25),
- embossing the second embossing lacquer layer (25) before or after applying the second metallization (22).

4. The method according to any of claims 1 to 3, **characterized in that** as the first functional layer (12) and/or as the second functional layer (22) there is applied an ink layer, said ink layer optionally being multicolored.

5. The method according to any of claims 1 to 4, **characterized in that** the first functional layer (12) and/or the second functional layer (22) is (are) applied only in partial areas, and the process of bonding the first (10) and the second (20) security-element partial elements and detaching the second carrier substrate (21) is carried out successively with at least two second security-element partial elements (20), thereby forming different second functional areas (23) in the second functional layer (22) of the security element (1).

6. The method according to any of claims 1 to 5, **characterized in that** the resist areas (33) are formed as lines (4) of a defined width y.

7. The method according to any of claims 1 to 6, **characterized in that** the resist layer (30) is applied as a pattern (7) in which the resist areas (33) and the gaps (34) form a subpattern (7') as well.

8. A security element (1) having negative writing (3) for attachment to, or at least partial incorporation in, a security paper or an object of value, in particular a value document, which is obtainable by a method according to any of claims 1 to 8 and is constructed from several layers which in each case extend over the entire security element (1) or over partial areas of the security element, the layers having at least the following:
- a transparent or translucent carrier substrate (11),
- a resist layer (30) with resist areas (33) and gaps (34) which form a predetermined pattern (7),
- a first functional layer (12), with first functional areas (13) and first gaps (14) which form a pattern which is caused by the pattern (7) of the resist layer (30),
- a second functional layer (22) with second functional areas (23) and second gaps (24) which form a pattern which is caused at least partly by the pattern (7) of the resist layer (30),
wherein
- the resist areas (33) bond the first functional layer (12) and the second functional layer (22) together directly.

9. The security element (1) according to claim 8, **characterized in that** the first functional layer (12) has first functional areas (13) and first gaps (14) which form a pattern (7) which is caused by the pattern (7) of the resist layer, and the resist areas (33) bond the first (13) and second (23) functional areas together directly, the first (13) and second (23) functional areas and the resist areas (33) are congruent, regarded in a plan view of the security element, and the first (14) and the second (24) gaps and the gaps (34) in the resist layer (30) are congruent and form the negative writing (3).

10. The security element (1) according to claim 8 or 9, **characterized in that** it has at least one intermediate layer (15) between the first carrier substrate (11) and the first functional layer (12), and/or at least one intermediate layer (25) on the second functional layer (22).

11. The security element (1) according to any of claims 8 to 10, **characterized in that** it has at least one further layer (26; 27) on the second functional layer (22).

12. The security element (1) according to claim 11, **characterized in that** the at least one further layer is a layer (27) with a color shift effect and/or a protective layer (26).

13. A transfer material for transferring security elements to a security paper or an object of value such as a value document, **characterized in that** it has a multiplicity of security elements (1) according to any of claims 8 to 12 configured as transfer elements.

14. A security paper or object of value, such as a value document, **characterized in that** it has a security element (1) according to any of claims 8 to 12.

15. A method for producing a security paper or an object of value, such as a value document, **characterized in that** a security element (1) according to any of claims 8 to 12 is applied thereto or at least partly incorporated therein.

## Revendications

1. Procédé de fabrication d'un élément de sécurité (1) comportant une écriture en négatif (3), destiné à un papier de sécurité ou à un objet de valeur, notamment un document de valeur, comportant les étapes suivantes:
a) fabrication d'un premier sous-élément (10) d'élément de sécurité par
- mise à disposition d'un premier substrat porteur (11) transparent ou translucide,
- application d'une première couche fonctionnelle (12) sur le premier substrat porteur (11) ou sur une couche intermédiaire (15) préalablement appliquée,
- application d'une couche de résist (30) sur la première couche fonctionnelle (12)
- sous forme d'un motif (7) prédéterminé ayant des zones de résist (33) et des dégagements (34) entre les zones de résist,
- enlèvement des zones de la première couche fonctionnelle (12) non protégées par des zones de résist (33), afin de générer des premières zones fonctionnelles (13) et des premiers dégagements (14) entre ces dernières,
b) fabrication d'un deuxième sous-élément (20) d'élément de sécurité par
- mise à disposition d'un deuxième substrat porteur (21),
- application d'une deuxième couche fonctionnelle (22) sur le deuxième substrat porteur (21) ou sur une couche intermédiaire (25) préalablement appliquée,
c) assemblage du premier (10) et du deuxième (20) sous-élément d'élément de sécurité de façon à obtenir un composite (5), de telle manière que la couche de résist (30) et la deuxième couche fonctionnelle (22) se font face, et collage du premier (10) et du deuxième (20) sous-élément d'élément de sécurité, de préférence sous pression élevée et température élevée, et
d) extraction du deuxième substrat porteur (21) du composite (5) collé, la deuxième couche fonctionnelle (22) continuant à adhérer aux zones de résist (33) en formant des deuxièmes zones fonctionnelles (23), tandis que les zones restantes de la deuxième couche fonctionnelle (22) sont extraites en même temps que le deuxième substrat porteur (21), ce qui a pour effet de former dans la deuxième couche fonctionnelle (22) des deuxièmes dégagements (24) qui, conjointement avec les dégagements (34) situés dans la couche de résist (30) et les premiers dégagements (14) situés dans la première couche fonctionnelle (12), constituent l'écriture en négatif (3).

2. Procédé selon la revendication 1, **caractérisé en ce que** le premier sous-élément (10) d'élément de sécurité est fabriqué par
- mise à disposition du premier substrat porteur (11),
- application d'une première couche de vernis de gaufrage (15) en tant que couche intermédiaire sur le premier substrat porteur (11),
- application d'une première métallisation (12) en tant que couche fonctionnelle sur la première couche de vernis de gaufrage (15),
- gaufrage de la première couche de vernis de gaufrage (15) avant ou après l'application de la première métallisation (12),
- application de la couche de résist (30) sur la première métallisation (12), la couche de résist comportant des zones de résist (33) et des dégagements (34), ou des zones de résist (33) et des dégagements (34) y étant générés, et
- formation de premiers dégagements (14) dans la première métallisation (12) par enlèvement des zones de la première métallisation (12) non protégées par des zones de résist (33).

3. Procédé selon la revendication 1 ou 2, **caractérisé en ce que** le deuxième sous-élément (20) d'élément de sécurité est fabriqué par
- mise à disposition du deuxième substrat porteur (21),
- application d'une deuxième couche de vernis de gaufrage (25) en tant que couche intermédiaire sur le deuxième substrat porteur (21),
- application d'une deuxième métallisation (22) en tant que deuxième couche fonctionnelle sur la deuxième couche de vernis de gaufrage (25),
- gaufrage de la deuxième couche de vernis de gaufrage (25) avant ou après l'application de la deuxième métallisation (22).

4. Procédé selon une des revendications de 1 à 3, **caractérisé en ce que**, en tant que première couche fonctionnelle (12) et/ou en tant que deuxième couche fonctionnelle (22), une couche d'encre est appliquée, la couche d'encre étant le cas échéant polychrome.

5. Procédé selon une des revendications de 1 à 4, **caractérisé en ce que** la première couche fonctionnelle (12) et/ou la deuxième couche fonctionnelle (22) n'est (ne sont) appliquée(s) que dans des zones partielles, et **en ce que** le processus de collage du premier (10) et du deuxième (20) sous-élément d'élément de sécurité et de l'extraction du deuxième substrat porteur (21) sont effectués l'un après l'autre avec au moins deux deuxièmes sous-éléments (20) d'élément de sécurité, ce qui a pour effet de former dans la deuxième couche fonctionnelle (22) de l'élément de sécurité (1) des deuxièmes zones fonctionnelles (23) différentes.

6. Procédé selon une des revendications de 1 à 5, **caractérisé en ce que** les zones de résist (33) sont réalisées sous forme de lignes (4) d'une largeur définie y.

7. Procédé selon une des revendications de 1 à 6, **caractérisé en ce que** la couche de résist (30) est appliquée en tant qu'un motif (7) dans lequel les zones de résist (33) et les dégagements (34) constituent par ailleurs un sous-motif (7').

8. Elément de sécurité (1) comportant une écriture en négatif (3) destiné à être placé sur ou au moins partiellement inséré dans un papier de sécurité ou un objet de valeur, notamment un document de valeur, qui peut être obtenu suivant un procédé selon une des revendications de 1 à 8 et est constitué de plusieurs couches qui s'étendent respectivement sur l'ensemble de l'élément de sécurité (1) ou sur des zones partielles de l'élément de sécurité, les couches comportant au moins les éléments suivants:
- un substrat porteur (11) transparent ou translucide,
- une couche de résist (30) ayant des zones de résist (33) et des dégagements (34) qui constituent un motif (7) prédéterminé,
- une première couche fonctionnelle (12) ayant des premières zones fonctionnelles (13) et des premiers dégagements (14) qui constituent un motif qui dépend du motif (7) de la couche de résist (30),
- une deuxième couche fonctionnelle (22) ayant des deuxièmes zones fonctionnelles (23) et des deuxièmes dégagements (24) qui constituent un motif qui dépend au moins partiellement du motif (7) de la couche de résist (30),
et en l'occurrence
- les zones de résist (33) collant directement entre elles la première couche fonctionnelle (12) et la deuxième couche fonctionnelle (22).

9. Elément de sécurité (1) selon la revendication 8, **caractérisé en ce que** la première couche fonctionnelle (12) comporte des premières zones fonctionnelles (13) et des premiers dégagements (14) qui constituent un motif (7) qui dépend du motif (7) de la couche de résist, **en ce que** les zones de résist (33) collent les premières (13) et deuxièmes (23) zones fonctionnelles directement entre elles, **en ce que** les premières (13) et deuxièmes (23) zones fonctionnelles et les zones de résist (33), vues de dessus l'élément de sécurité, coïncident entre elles, et **en ce que** les premiers (14) et les deuxièmes (24) dégagements et les dégagements (34) dans la couche de résist (30) coïncident entre eux et constituent l'écriture en négatif (3).

10. Elément de sécurité (1) selon la revendication 8 ou 9, **caractérisé en ce qu'**il comporte entre le premier substrat porteur (11) et la première couche fonctionnelle (12) au moins une couche intermédiaire (15) et/ou sur la deuxième couche fonctionnelle (22) au moins une couche intermédiaire (25).

11. Elément de sécurité (1) selon une des revendications de 8 à 10, **caractérisé en ce qu'**il comporte sur la deuxième couche fonctionnelle (22) au moins une couche supplémentaire (26; 27).

12. Elément de sécurité (1) selon la revendication 11, **caractérisé en ce que** la au moins une couche supplémentaire est une couche (27) à effet de changement des couleurs par basculement et/ou une couche de protection (26).

13. Matériau de transfert destiné à la transposition d'éléments de sécurité sur un papier de sécurité ou sur un objet de valeur tel qu'un document de valeur, **caractérisé en ce qu'**il comporte une pluralité d'éléments de sécurité (1) selon une des revendications de 8 à 12 réalisés en tant qu'éléments de transfert.

14. Elément de sécurité ou objet de valeur tel qu'un document de valeur, **caractérisé en ce qu'**il comporte un élément de sécurité (1) selon une des revendications de 8 à 12.

15. Procédé de fabrication d'un papier de sécurité ou d'un objet de valeur tel qu'un document de valeur, **caractérisé en ce qu'**un élément de sécurité (1) selon une des revendications de 8 à 12 est appliqué par-dessus ou est inséré au moins partiellement dedans.
